# EUROPEAN PATENT APPLICATION

(11) **EP 4 848 878 A1**
(43) Date of publication of application: **02.12.2026**
(21) Application number: 25751408.3
(22) Date of filing: 26.01.2025
(51) Int. Cl.: H04W 76/11

(54) **DATA CHANNEL ESTABLISHMENT METHOD AND APPARATUS**

(30) Priority: 08.02.2024 CN 202410179987
(71) Applicant: Huawei Technologies Co., Ltd., Shenzhen, Guangdong 518129 (CN)
(72) Inventor: LI, Mu, Shenzhen, Guangdong 518129 (CN); HU, Xiaokun, Shenzhen, Guangdong 518129 (CN); ZUO, Jun, Shenzhen, Guangdong 518129 (CN); JI, Mengdi, Shenzhen, Guangdong 518129 (CN)
(74) Representative: Thun, Clemens
(86) International application number: PCT/CN2025/075277
(87) International publication number: WO 2025/167808

(57) **Abstract**

A data channel establishment method and an apparatus are provided, and relate to the field of communication technologies. The method includes: receiving first information, where the first information is used for notifying that a first terminal device requests to establish a first data channel, the first data channel is used for transmission of data of a data channel application, and the first information includes an identifier of the data channel application and version information of the data channel application; and determining, based on the identifier of the data channel application and the version information of the data channel application, whether to accept the establishment of the first data channel by the first terminal device. According to the method, the first data channel may be directly established when the terminal device caches the data channel application that meets version compatibility, avoiding an additional process of downloading the data channel application.

## Description

### CROSS-REFERENCE TO RELATED APPLICATIONS

This application claims priority to Chinese Patent Application No. 202410179987.1, filed with the China National Intellectual Property Administration on February 8, 2024 and entitled "DATA CHANNEL ESTABLISHMENT METHOD AND APPARATUS", which is incorporated herein by reference in its entirety.

### TECHNICAL FIELD

This application relates to the field of communication technologies, and in particular, to a session establishment method and a related apparatus.

### BACKGROUND

The 3rd generation partnership project (3rd Generation Partnership Project, 3GPP) has defined an IMS data channel (Data Channel, DC) based on a 3GPP internet protocol multimedia subsystem (Internet Protocol Multimedia Subsystem, IMS) audio and video communication architecture. To be specific, one or more data channels are established in an IMS session for transmission of any type of data in parallel with audio and videos, thereby implementing rich-media, interactive, and immersive communication experience in audio and video calls.

Data channels are classified into two types: a bootstrap data channel (bootstrap data channel, BDC) and an application data channel (application data channel, ADC). After the BDC is established, a terminal device obtains a data channel application (data channel application) from a data channel server (data channel server, DCS) through the BDC. Then, the terminal device initiates an ADC establishment procedure, and performs, through the ADC, transmission of exchanged data generated by the data channel application. In the foregoing process, the BDC needs to be first established before the establishment of the ADC, thereby delaying the establishment of the ADC, and incurring signaling resource overheads caused by the establishment of the unnecessary BDC.

### SUMMARY

Embodiments of this application provide a data channel establishment method, an apparatus, and a system.

According to a first aspect, a method is provided. The method includes the following steps: receiving first information from a first network element, where the first information is used for notifying that a first terminal device requests to establish a first data channel, the first data channel is used for transmission of data of a data channel application, and the first information includes an identifier of the data channel application and version information of the data channel application; and determining, based on the identifier of the data channel application and the version information of the data channel application, whether to accept the establishment of the first data channel by the first terminal device.

In the foregoing implementation, a second network element may determine, based on the identifier of the data channel application and the version information of the data channel application, whether to accept the establishment of the first data channel by the first terminal device.

In a possible implementation, the version information of the data channel application includes at least one of the following: a version number of the data channel application and time information corresponding to a version of the data channel application.

In a possible implementation, the determining, based on the identifier of the data channel application and the version information of the data channel application, whether to accept the establishment of the first data channel by the first terminal device includes: when the version information of the data channel application meets a version requirement, determining to accept the establishment of the first data channel by the first terminal device.

In a possible implementation, that the version information of the data channel application meets the version requirement includes: a version of the data channel application cached in the first terminal device is a latest version.

In a possible implementation, the method further includes: indicating the first network element to continue to establish the first data channel.

In a possible implementation, the first information is further used for notifying that establishment of a second data channel is requested, and the second data channel is used by the first terminal device to obtain the data channel application that meets the version requirement.

In a possible implementation, the method further includes: indicating the first network element to reject the establishment of the second data channel.

In a possible implementation, the method further includes: receiving second information from the first network element, where the second information is used for notifying a second terminal device that the establishment of the first data channel is rejected.

In a possible implementation, the second information is further used for notifying that the second terminal device has not cached the data channel application that meets the version requirement.

In a possible implementation, the method further includes: indicating the first network element to reject the establishment of the first data channel.

In a possible implementation, the method further includes: indicating the first network element to request the second terminal device to establish a third data channel, where the third data channel is used by the second terminal device to obtain the data channel application that meets the version requirement.

In a possible implementation, the method further includes: receiving the second information from the first network element, where the second information is used for notifying the second terminal device that the establishment of the third data channel is accepted.

In a possible implementation, the method further includes: indicating the first network element to accept the establishment of the third data channel.

In a possible implementation, the determining, based on the identifier of the data channel application and the version information of the data channel application, whether to accept the establishment of the first data channel by the first terminal device includes: when the version information of the data channel application does not meet a version requirement, determining to reject the establishment of the first data channel by the first terminal device.

In a possible implementation, that the version information of the data channel application does not meet the version requirement includes: a version of the data channel application cached in the first terminal device does not meet the version requirement.

In a possible implementation, that the version information of the data channel application does not meet the version requirement includes: the version of the data channel application cached in the first terminal device is not a latest version.

In a possible implementation, the method further includes: sending second information to the first network element, where the second information is used for notifying the second terminal device that the establishment of the first data channel is rejected.

In a possible implementation, the second information is further used for notifying that the first terminal device has not cached a data channel application that meets the version requirement.

In a possible implementation, the first information is further used for notifying that establishment of a second data channel is requested. The method further includes: indicating the first network element to accept the establishment of the second data channel.

According to a second aspect, a method is provided. The method includes the following steps: receiving first information, where the first information is used for notifying that a first terminal device requests to establish a first data channel, the first data channel is used for transmission of data of a data channel application, and the first information includes an identifier of the data channel application and version information of the data channel application; and determining, based on the identifier of the data channel application and the version information of the data channel application, whether to accept the establishment of the first data channel by the first terminal device.

The foregoing method may be performed by a terminal device.

In the foregoing implementation, a second terminal device may determine, based on the identifier of the data channel application and the version information of the data channel application, whether to accept the establishment of the first data channel by the first terminal device.

In a possible implementation, the determining, based on the identifier of the data channel application and the version information of the data channel application, whether to accept the establishment of the first data channel by the first terminal device includes: when the version information of the data channel application does not meet a version requirement, determining to reject the establishment of the first data channel by the first terminal device.

In a possible implementation, the method further includes: sending second information to a first network element, where the second information is used for notifying the communication apparatus that the establishment of the first data channel is rejected.

In a possible implementation, the second information is further used for notifying that the data channel application cached in the communication apparatus does not meet the version requirement.

In a possible implementation, the first information is further used for notifying that establishment of a second data channel is requested, the second data channel is used by the communication apparatus to obtain a data channel application that meets the version requirement, and the second information is further used for notifying the communication apparatus that the establishment of the second data channel is rejected.

In a possible implementation, the determining, based on the identifier of the data channel application and the version information of the data channel application, whether to accept the establishment of the first data channel by the first terminal device includes: when the version information of the data channel application meets a version requirement, determining to accept the establishment of the first data channel by the first terminal device.

In a possible implementation, the method further includes: sending second information to a first network element, where the second information is used for notifying the communication apparatus that the establishment of the first data channel is accepted.

In a possible implementation, the first information is further used for notifying that establishment of a second data channel is requested, the second data channel is used by the communication apparatus to obtain the data channel application that meets the version requirement.

The method further includes: indicating the first network element to reject the establishment of the second data channel by the communication apparatus.

According to a third aspect, a communication apparatus is provided. The communication apparatus includes a unit or a module configured to perform the method according to any implementation of the first aspect. The communication apparatus may provide a data channel signaling control function. Specifically, the communication apparatus may include a processing unit and a transceiver unit.

The transceiver unit receives first information from a first network element, where the first information is used for notifying that a first terminal device requests to establish a first data channel, the first data channel is used for transmission of data of a data channel application, and the first information includes an identifier of the data channel application and version information of the data channel application. The processing unit determines, based on the identifier of the data channel application and the version information of the data channel application, whether to accept the establishment of the first data channel by the first terminal device.

In a possible implementation, the version information of the data channel application includes at least one of the following: a version number of the data channel application and time information corresponding to a version of the data channel application.

In a possible implementation, the processing unit is specifically configured to determine, based on the version information of the data channel application, to accept the establishment of the first data channel by the first terminal device.

In a possible implementation, the processing unit is specifically configured to determine, by determining that a version of the data channel application cached in the first terminal device is a latest version, that the version information of the data channel application meets a version requirement.

In a possible implementation, the processing unit is further configured to indicate, by using the transceiver unit, the first network element to continue to establish the first data channel.

In a possible implementation, the first information is further used for notifying that establishment of a second data channel is requested, and the second data channel is used by the first terminal device to obtain the data channel application that meets the version requirement.

In a possible implementation, the processing unit is further configured to indicate, by using the transceiver unit, the first network element to reject the establishment of the second data channel.

In a possible implementation, the processing unit is further configured to receive second information from the first network element by using the transceiver unit, where the second information is used for notifying a second terminal device that the establishment of the first data channel is rejected.

In a possible implementation, the second information is further used for notifying that the second terminal device has not cached the data channel application that meets the version requirement.

In a possible implementation, the processing unit is further configured to indicate, by using the transceiver unit, the first network element to reject the establishment of the first data channel.

In a possible implementation, the processing unit is further configured to indicate, by using the transceiver unit, the first network element to request the second terminal device to establish a third data channel, where the third data channel is used by the second terminal device to obtain the data channel application that meets the version requirement.

In a possible implementation, the processing unit is further configured to receive second information from the first network element by using the transceiver unit, where the second information is used for notifying the second terminal device that the establishment of the third data channel is accepted.

In a possible implementation, the processing unit is further configured to indicate, by using the transceiver unit, the first network element to accept the establishment of the third data channel.

In a possible implementation, the processing unit is further configured to determine, by determining that the version information of the data channel application does not meet a version requirement, to reject the establishment of the first data channel by the first terminal device.

In a possible implementation, that the version information of the data channel application does not meet the version requirement includes: a version of the data channel application cached in the first terminal device does not meet the version requirement.

In a possible implementation, that the version information of the data channel application does not meet the version requirement includes: the version of the data channel application cached in the first terminal device is not a latest version.

In a possible implementation, the processing unit is further configured to send second information to the first network element by using the transceiver unit, where the second information is used for notifying the second terminal device that the establishment of the first data channel is rejected.

In a possible implementation, the second information is further used for notifying that the first terminal device has not cached a data channel application that meets the version requirement.

In a possible implementation, the first information is further used for notifying that establishment of a second data channel is requested. The method further includes: indicating the first network element to accept the establishment of the second data channel.

According to a fourth aspect, a communication apparatus is provided. The communication apparatus includes a unit or a module configured to perform the method according to any implementation of the second aspect. The communication apparatus may include a processing unit and a transceiver unit.

A communication apparatus is provided. The communication apparatus includes a unit or a module configured to perform the method according to any implementation of the second aspect. The communication apparatus may include a processing unit and a transceiver unit.

The transceiver unit receives first information, where the first information is used for notifying that a first terminal device requests to establish a first data channel, the first data channel is used for transmission of data of a data channel application, and the first information includes an identifier of the data channel application and version information of the data channel application. The processing unit determines, based on the identifier of the data channel application and the version information of the data channel application, whether to accept the establishment of the first data channel by the first terminal device.

In a possible implementation, the processing unit is further configured to determine, by determining that the version information of the data channel application does not meet a version requirement, to reject the establishment of the first data channel by the first terminal device.

In a possible implementation, the processing unit is further configured to send second information to a first network element by using the transceiver unit, where the second information is used for notifying the communication apparatus that the establishment of the first data channel is rejected.

In a possible implementation, the second information is further used for notifying that the data channel application cached in the communication apparatus does not meet the version requirement.

In a possible implementation, the first information is further used for notifying that establishment of a second data channel is requested, the second data channel is used by the communication apparatus to obtain a data channel application that meets the version requirement, and the second information is further used for notifying the communication apparatus that the establishment of the second data channel is rejected.

In a possible implementation, the determining, based on the identifier of the data channel application and the version information of the data channel application, whether to accept the establishment of the first data channel by the first terminal device includes: when the version information of the data channel application meets a version requirement, determining to accept the establishment of the first data channel by the first terminal device.

In a possible implementation, the processing unit is further configured to send second information to a first network element by using the transceiver unit, where the second information is used for notifying the communication apparatus that the establishment of the first data channel is accepted.

In a possible implementation, the first information is further used for notifying that establishment of a second data channel is requested, and the second data channel is used by the communication apparatus to obtain the data channel application that meets the version requirement. The transceiver unit indicates the first network element to reject the establishment of the second data channel by the communication apparatus.

According to a fifth aspect, a communication system is provided, including a data channel signaling functional entity and a terminal device. The data channel signaling functional entity is configured to implement the method according to any implementation of the first aspect, and the terminal device is configured to implement the method according to any implementation of the second aspect.

According to a sixth aspect, a readable storage medium is provided. The readable storage medium stores a program. When the program is executed by a communication apparatus, the method according to any implementation of the first aspect or the method according to any implementation of the second aspect is implemented.

According to a seventh aspect, a chip system is provided, including: a memory, configured to store a computer program; and a processor. After the processor invokes the computer program from the memory and runs the computer program, a communication apparatus in which the chip system is installed is caused to perform the method according to any implementation of the first aspect or the method according to any implementation of the second aspect.

According to an eighth aspect, a computer program product is provided. The computer program product includes instructions. When the instructions are run on a processor, the processor is caused to perform the method according to any implementation of the first aspect or the method according to any implementation of the second aspect.

### BRIEF DESCRIPTION OF DRAWINGS

FIG. 1 is a diagram of an architecture of a communication network applicable to this application;
FIG. 2 is a diagram of a network architecture applicable to this application;
FIG. 3 is a flowchart of obtaining a data channel application applicable to this application;

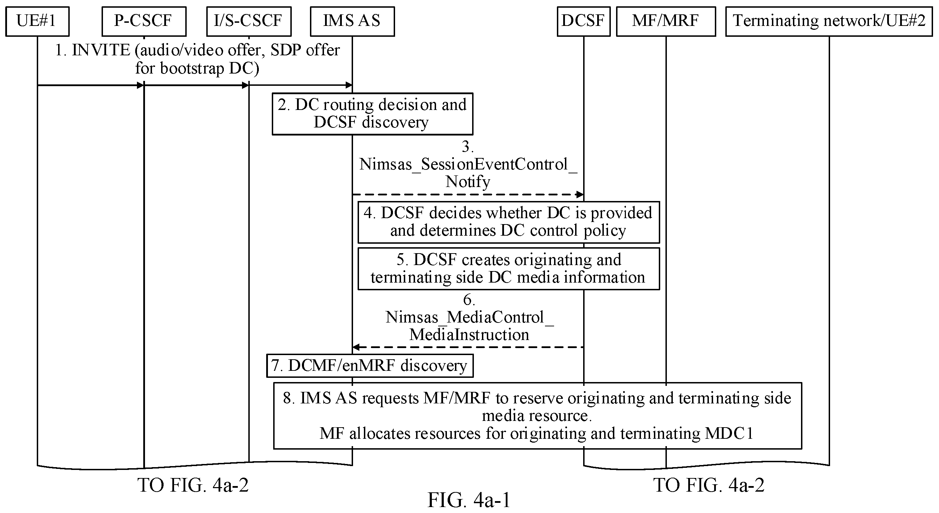

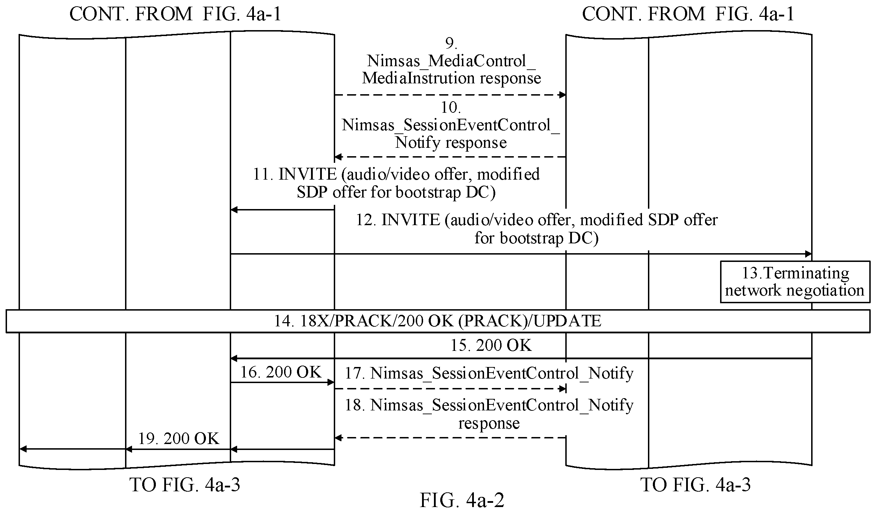

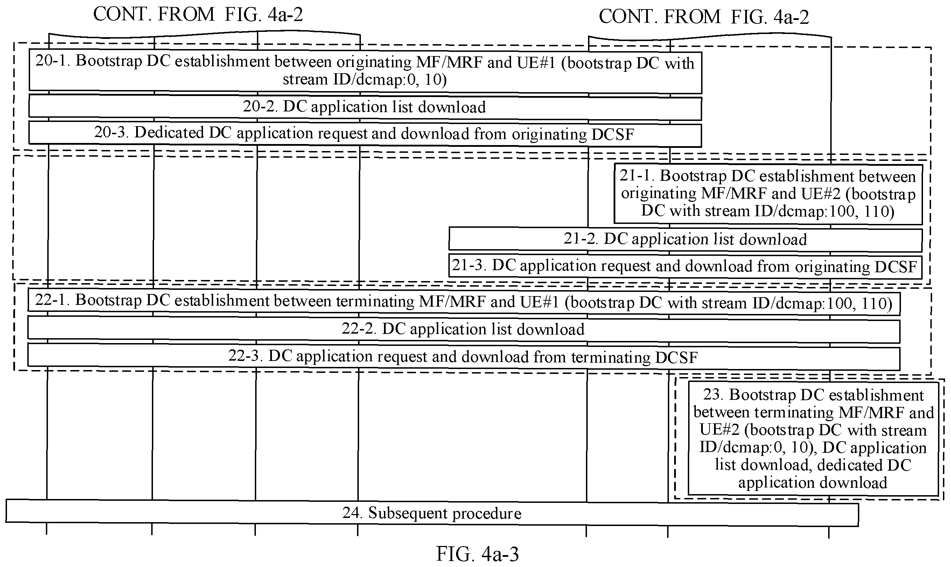

FIG. 4a-1 to FIG. 4a-3 are a flowchart of BDC establishment applicable to this application;

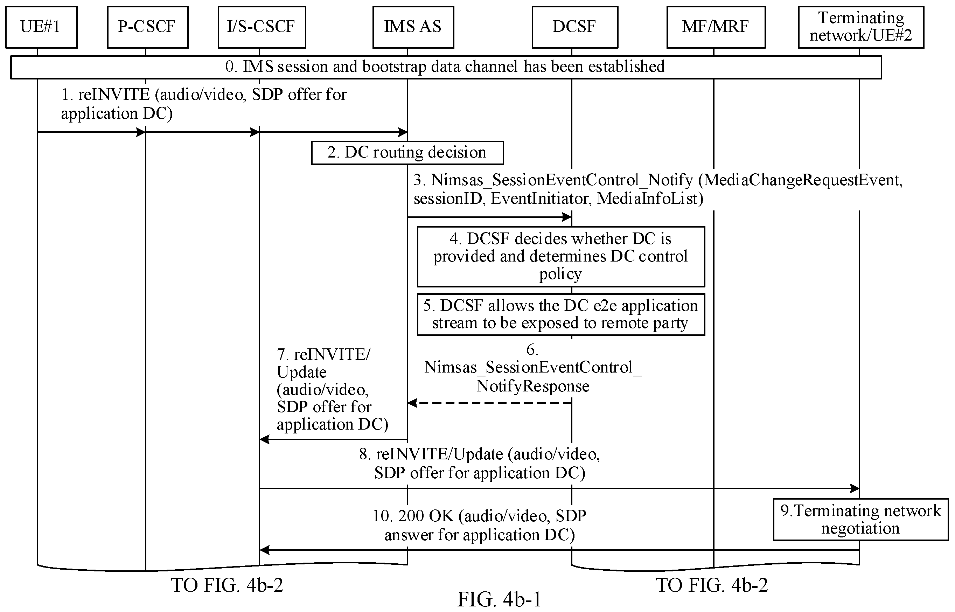

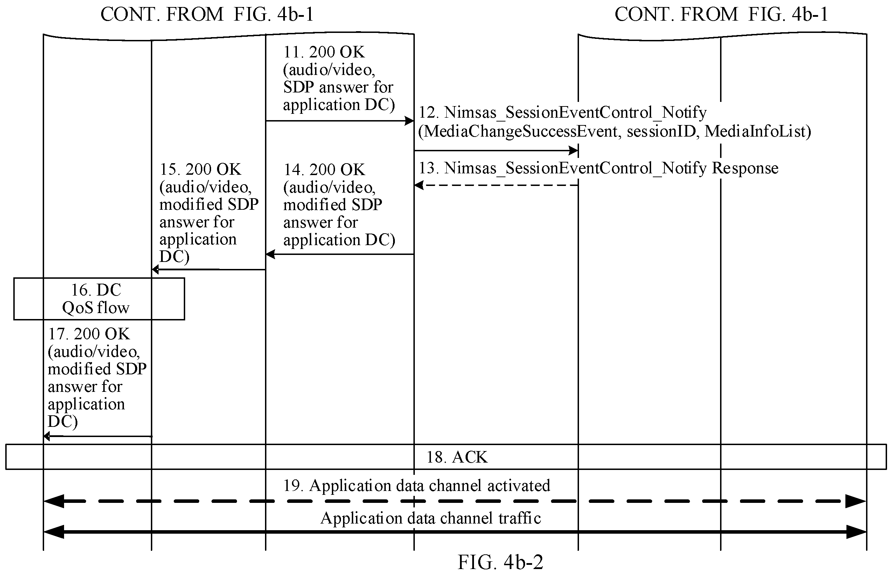

FIG. 4b-1 and FIG. 4b-2 are a flowchart of ADC establishment applicable to this application;

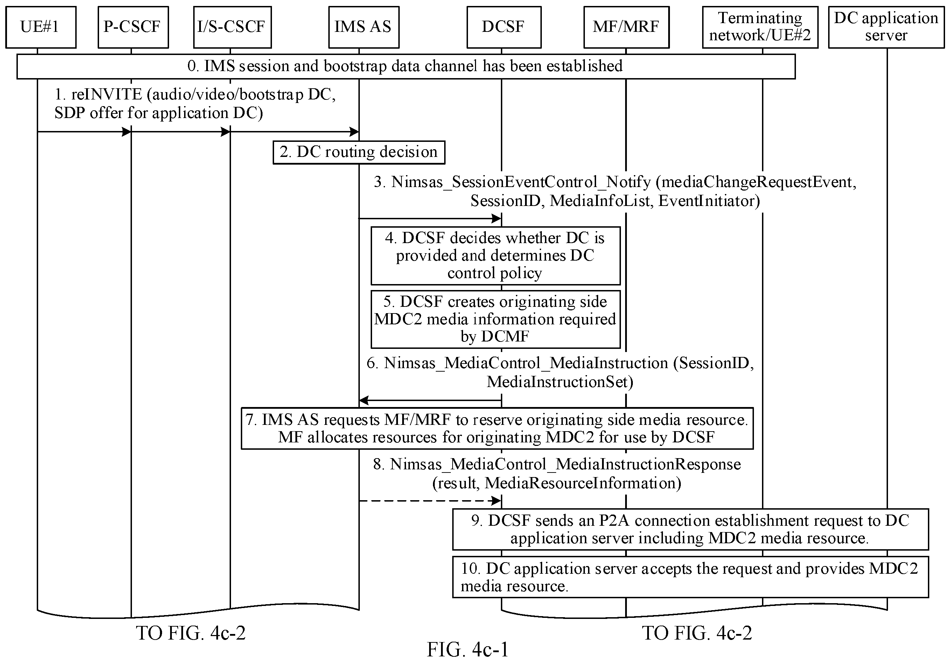

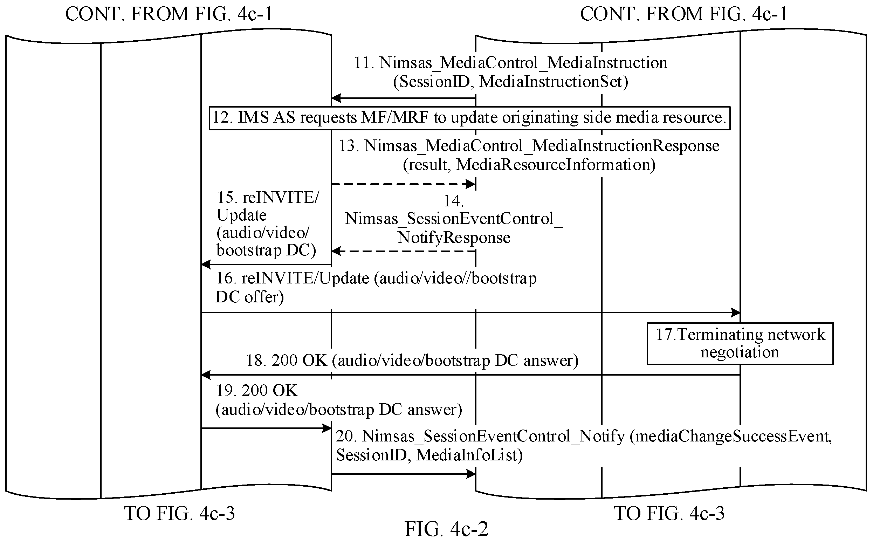

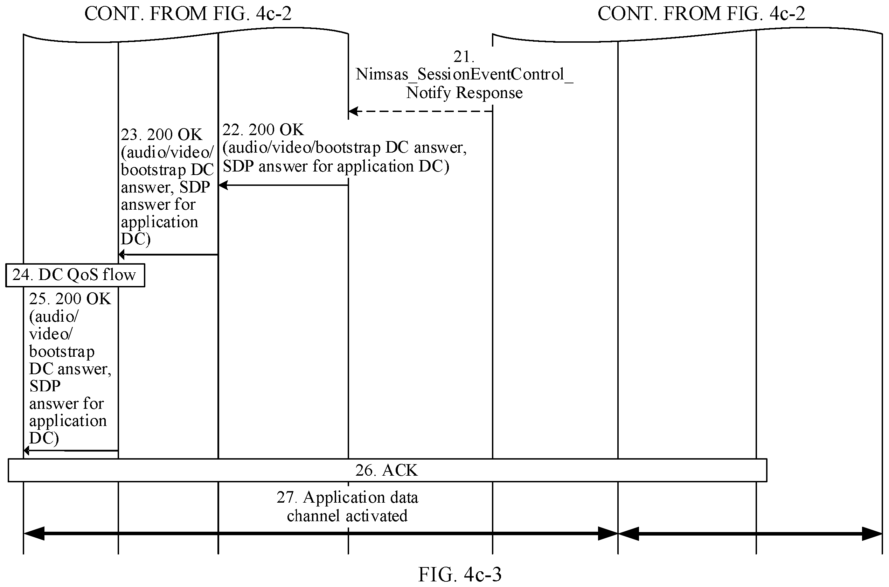

FIG. 4c-1 to FIG. 4c-3 are a flowchart of ADC establishment applicable to this application;

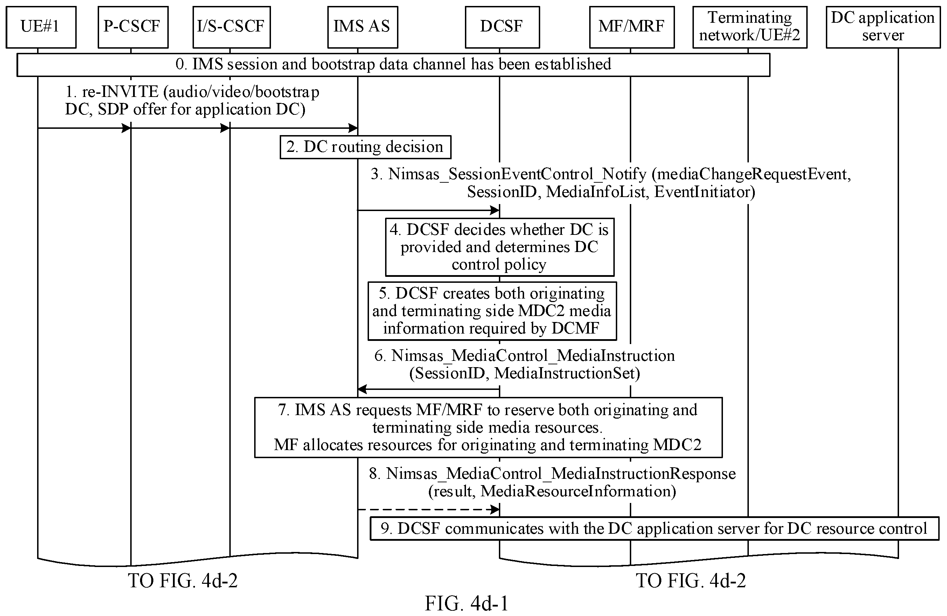

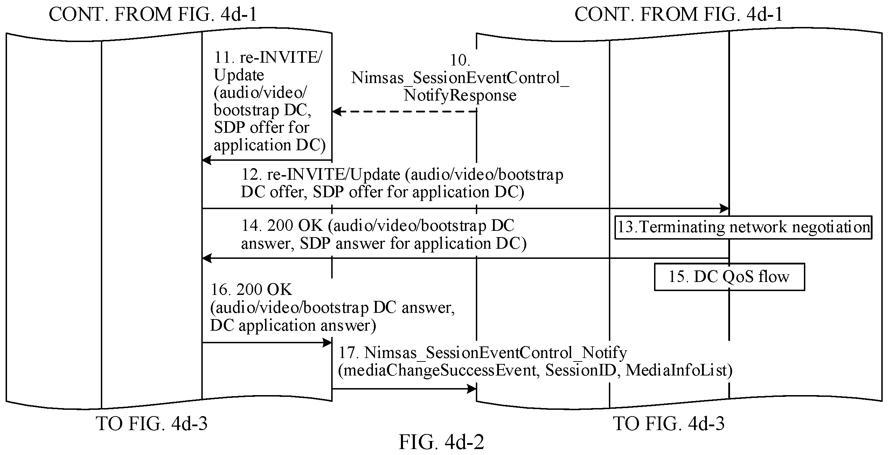

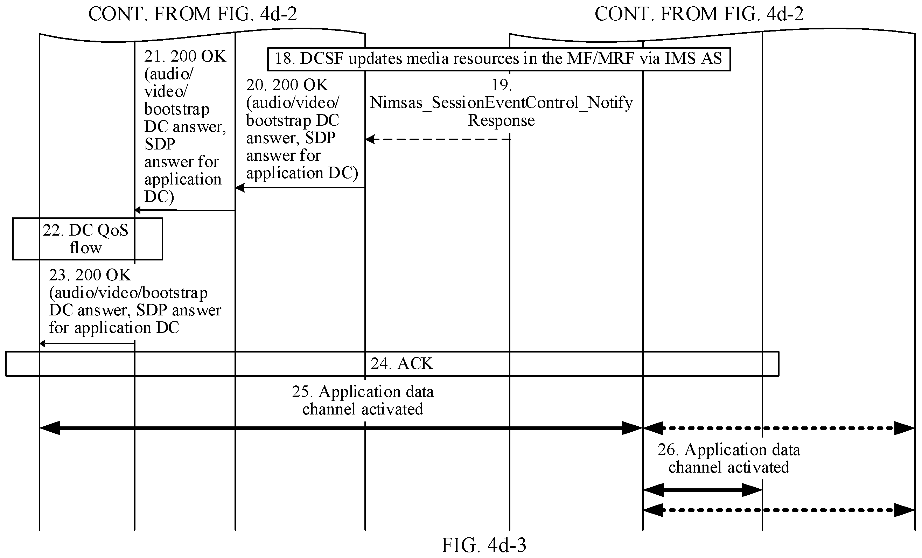

FIG. 4d-1 to FIG. 4d-3 are a flowchart of ADC establishment applicable to this application;

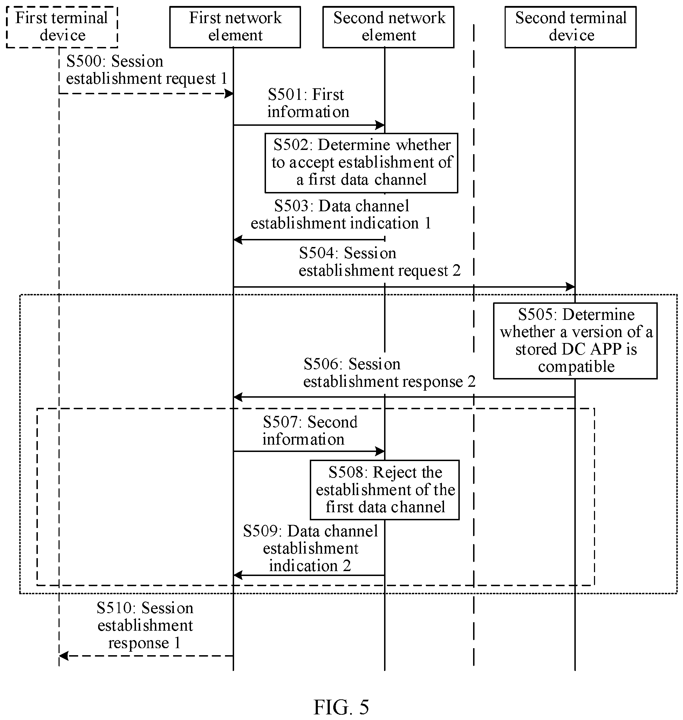

FIG. 5 is a flowchart of session establishment according to an embodiment of this application;

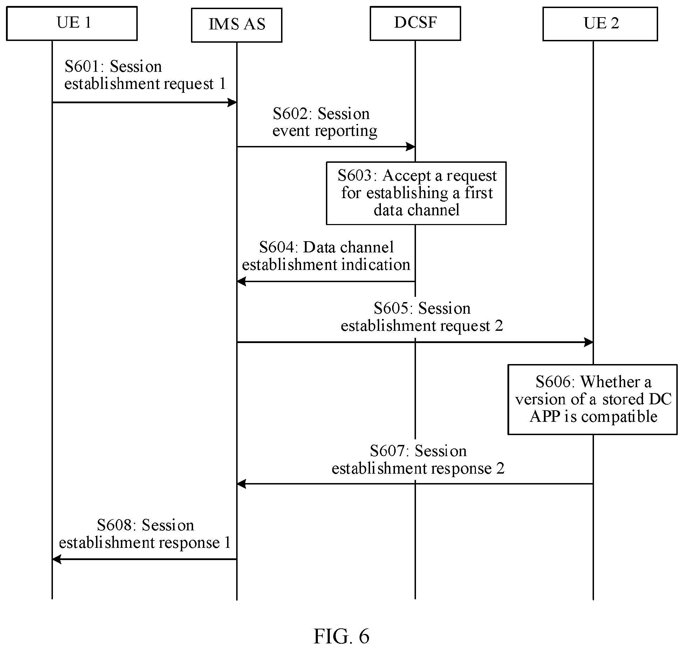

FIG. 6 is a flowchart of session establishment according to an embodiment of this application;

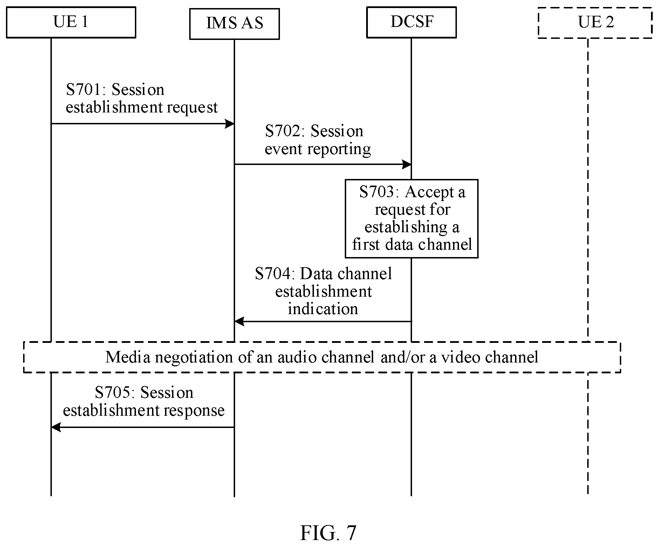

FIG. 7 is a flowchart of session establishment according to an embodiment of this application;

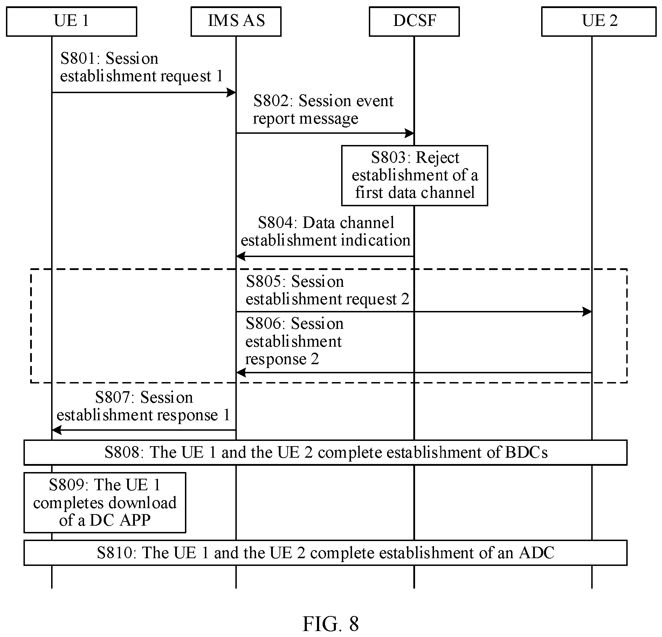

FIG. 8 is a flowchart of session establishment according to an embodiment of this application;

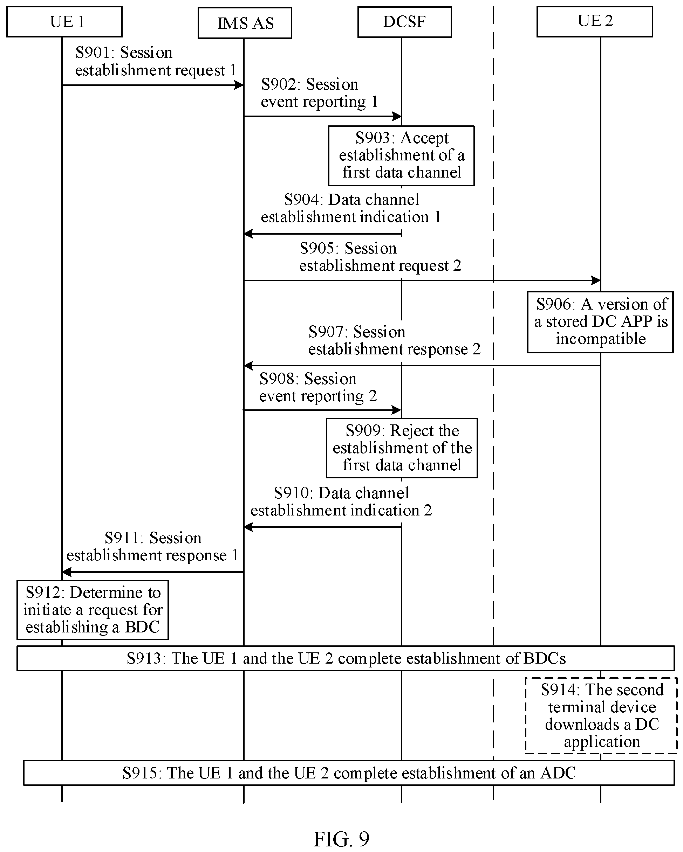

FIG. 9 is a flowchart of session establishment according to an embodiment of this application;

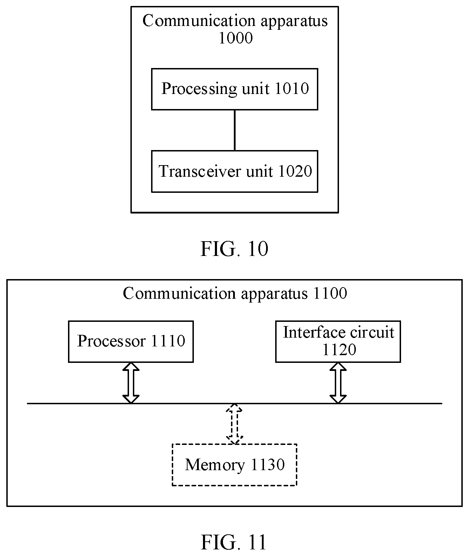

FIG. 10 is a block diagram of a possible example of an apparatus according to an embodiment of this application; and
FIG. 11 is a diagram of a possible structure of an apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It may be understood that various numbers in this application are merely used for differentiation for ease of description, but are not used to limit the scope of this application. Sequence numbers of the foregoing processes do not mean an execution sequence, and the execution sequence of the processes should be determined based on functions and internal logic of the processes.

In the specification, claims, and accompanying drawings of this application, the terms "first", "second", "third", "fourth", and various other number terms (if existent) are intended to distinguish between similar objects, but do not necessarily indicate a specific order or sequence. It should be understood that data termed in such a way are interchangeable in proper circumstances, so that embodiments described herein can be implemented in other orders than the order illustrated or described herein. In addition, the terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to the process, method, product, or device.

The technical solutions provided in this application may be applied to various communication systems, for example, a 5th generation (5th generation, 5G) communication system (or referred to as a new radio (new radio, NR) system), a 4th generation (4th generation, 4G) communication system (or referred to as a long term evolution (long term evolution, LTE) system), an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system.

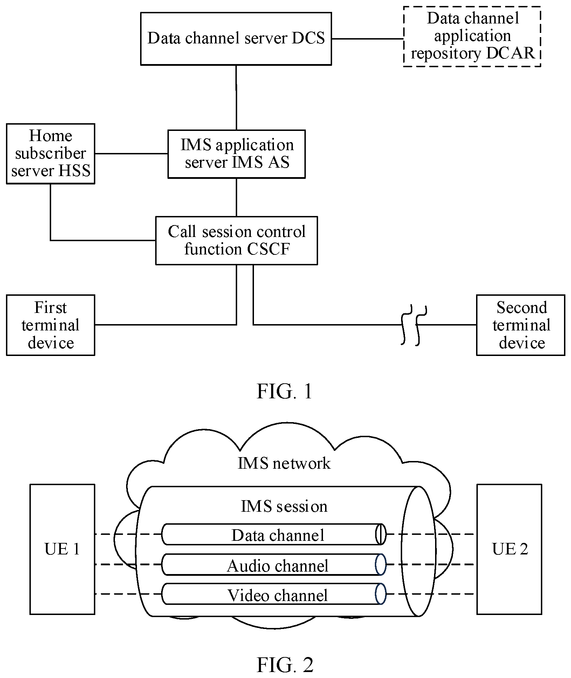

The following describes, with reference to FIG. 1, a communication system 100 according to an embodiment of this application by using an example. It should be understood that the communication system described in this application is merely an example, and should not constitute any limitation on this application. Network elements (or referred to as functional network elements, functional entities, nodes, devices, and the like) shown in FIG. 1 are briefly described herein.
1. Terminal device (for example, a first terminal device or a second terminal device in FIG. 1): The terminal device may be any device that can access a network, and may also be referred to as user equipment (user equipment, UE, which may be referred to as UE 1 or UE 2 below for ease of description), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, a user apparatus, or the like. The UE may be a device that provides voice/data connectivity for a user, for example, a handheld device or a vehicle-mounted device having a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (Augmented Reality, AR) device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a compute device that has a wireless communication function, another processing device, vehicle-mounted device, or wearable device that is connected to a wireless modem, a terminal device in a 4G/5G network, or a terminal device in a future evolved public land mobile network (public land mobile network, PLMN).

In addition, the UE may alternatively be UE in an internet of things (Internet of things, IoT) system. An IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrowband (narrowband, NB) technology.

The UE may further include an intelligent printer, a train detector, and the like. Main functions of the UE include collecting data (some terminal devices), receiving control information and downlink data of a network device, sending an electromagnetic wave, and transmitting uplink data to the network device.

Optionally, the UE may serve as a base station. For example, the user equipment may serve as a scheduling entity that provides a sidelink signal between user equipment in vehicle-to-everything (vehicle-to-everything, V2X), device-to-device (device-to-device, D2D), or the like. For example, a cellular phone and an automobile communicate with each other via a sidelink signal. The cellular phone communicates with a smart home device without relaying a communication signal through a base station.

In network architectures provided in embodiments of this application, different UE may perform an IMS call through IMS networks. For example, the UE 1 and the UE 2 in FIG. 1 may perform an IMS call through IMS networks. The UE 2 may be referred to as a peer device that performs the IMS call with the UE 1. Similarly, the UE 1 may be referred to as a peer device that performs the IMS call with the UE 2. It is assumed that the UE 1 is a device that initiates the call. For the UE 1, the IMS network serving the UE 1 may be referred to as a local IMS (Local IMS) network, and the IMS network serving the UE 2 may be referred to as a remote IMS (Remote IMS) network. It may be understood that a network element architecture inside the remote IMS network is similar to a network element architecture inside the local IMS network. For brevity, the network element architecture inside the remote IMS network is not shown in the figure.

2. Call session control function (call session control function, CSCF) network element: A CSCF is a functional entity inside an IMS network, and is a core of the entire IMS. The CSCF is mainly responsible for processing signaling control in a multimedia call session process. The CSCF manages user authentication of the IMS, cooperates with another network element to perform session initiation protocol (session initiation protocol, SIP) session control, service negotiation, resource allocation, and the like. For ease of description, the CSCF network element in this application is referred to as the "CSCF".

The CSCF may communicate with a terminal device, and the CSCF may communicate with a gateway device. For example, the CSCF may select a gateway device communicating with the terminal device. In addition, the CSCF may allocate routing information, for example, an IP address or a port, to the terminal device and the gateway device. For example, the gateway device may be an IMS access gateway (IMS Access Gateway, IMS-AGW).

By way of example but not limitation, the CSCF is classified into a proxy-CSCF (proxy-CSCF, P-CSCF), an interrogating-CSCF (interrogating-CSCF, I-CSCF), a serving-CSCF (serving-CSCF, S-CSCF), and the like based on functions.

The P-CSCF is an ingress node for a terminal device of a user to access the IMS network, and is mainly responsible for forwarding SIP signaling between a terminal device of an IMS user and a home network. The I-CSCF is a unified ingress point of the home network of the IMS user, and is responsible for allocating or querying for an S-CSCF serving the user. The S-CSCF is a service switching center of the IMS network, is mainly responsible for user registration request receiving and processing, user management, session control, service switching, service control, SIP message processing, charging, and the like, and can trigger a SIP request to a corresponding application server (application server, AS) according to an application trigger principle. It may be understood that the P-CSCF, the S-CSCF, and the I-CSCF may be independently disposed in different entities, or may be integrated into a same entity. This is not limited in this application.

3. Data channel server (data channel server, DCS): The DCS may be divided into two logical functional entities: a data channel signaling function (data channel signaling function, DCSF) network element and a media function (media function, MF) network element. The MF network element is configured to provide a data channel media resource management function, and the DCSF is configured to provide a data channel signaling control function. In this application, FIG. 1 mainly shows a signaling function of the data channel server. The data channel server further has a media function, and the MF is not shown in FIG. 1.

It may be understood that, in actual network deployment, the DCSF network element and the MF network element may be integrated (referred to as the DCS in this case), or may be separated. This is not limited in this application.

In embodiments of this application, the DCSF in the following may be a DCS.

4. Data channel application repository (data channel application repository, DCAR): The DCAR is a repository used to store a data channel application (data channel application, DC APP).

After a developer completes development of a DC APP, the developer uploads the DC APP to a DCS of an operator, and then the DCS stores the DC APP in the DCAR. The DCS downloads the DC APP from the DCAR to a local when necessary, for subsequent processing.

5. Home subscriber server (home subscriber server, HSS): The HSS serves as a database for storing user information in the IMS, and the user stores user data. By way of example but not limitation, the user data may include information that is about a data channel service and that is subscribed to by the user and the operator to use.

6. IMS application server (application server, AS): The IMS AS is an application layer device at an upper layer of the IMS system, and provides basic services and supplementary services, for example, a multimedia conference, convergent communication, a short message service gateway, and a standard attendant console. The IMS network is an IP bearer-based open system that provides various multimedia services for the user. The IMS AS interacts with the CSCF to trigger and execute various network services. In addition, the terminal device is communicatively connected to the IMS AS. The IMS AS may establish a data channel for the terminal device. For example, the IMS AS may be a multimedia telephony application server (multimedia telephony application server, MMTEL AS) or a telephony application server (telephony application server, TAS).

The foregoing network architecture applied to embodiments of this application is merely an example, and a network architecture applicable to embodiments of this application is not limited thereto. Any network architecture that can implement functions of the foregoing network elements is applicable to embodiments of this application. In other words, the network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

It may be further understood that the network elements or devices listed in the foregoing network architecture are merely examples for description, and the network architecture applicable to this application may further include another network element or device. This is not limited in this application.

It may be further understood that names of the foregoing network elements or devices are defined only for ease of distinguishing between different functions, and should not constitute any limitation on this application. This application does not exclude a possibility of using other names in a 4G network, a 5G network, and another future network. For example, in a 6G network, some or all of the foregoing network elements may still use terms in 4G/5G, or may use other names.

Based on the network architecture shown in FIG. 1, to facilitate understanding of the technical solutions in embodiments of this application, some terms or concepts that may be used in embodiments of this application are described herein.

### 1. Communication session

The communication session described in embodiments of this application is an IMS session (as shown in FIG. 2), which may also be referred to as an IMS communication session, a session, or the like. The communication session is a communication between a terminal device participating as a calling party or a called party in the communication and one or more other terminal devices via network elements in an IMS network.

The IMS communication session may cover an entire process from starting dialing to ending a call, or may cover a part of a process from starting dialing to ending the call, for example, a process from entering a call state by all parties participating in the IMS communication session to ending the call.

The IMS communication session may be in a one-to-one form, or may be in a one-to-many (for example, a conference) form. In embodiments of this application, the one-to-one form is used as an example, but all related solutions may be used in the one-to-many form.

### 2. Data channel

The data channel in embodiments of this application, also referred to as an IMS data channel (IMS data channel, IMS DC), namely, a data channel in the IMS, may be used for data transmission according to a stream control transmission protocol (stream control transmission protocol, SCTP). That is, the data channel is a logical channel or a data connection for data transmission according to SCTP.

For example, the DC may provide richer real-time interaction services for users in addition to audio/video calls and texts. For example, terminal devices in a same IMS communication session determine, through an SIP/session description protocol (session description protocol, SDP) media negotiation procedure in the IMS, IP addresses and ports used by the two terminal devices for data transmission, key information required for establishing a datagram transport layer security (datagram transport layer security, DTLS) association and an SCTP association, and media information corresponding to the data channel, to establish, in the IMS session, one or more data channels (for example, a data channel shown in FIG. 2) for transmission in parallel with an audio channel and a video channel. The data channel is associated with the IMS communication session. It may be understood that FIG. 2 is illustrated by using an example in which the IMS session includes the audio channel, the video channel, and the data channel. In another possible example, the IMS session may alternatively include only the data channel, and does not include another channel (for example, the audio channel or the video channel).

Further, UE 1 and UE 2 may download various data channel applications from a network side DCS through the data channel, run such applications before, during, or after an audio/video call, and perform transmission of various types of application data of such applications through the data channel. Therefore, communication other than a voice call or a video call can be performed between the UE 1 and the UE 2, for example, screen sharing (screen sharing), simultaneous translation (simultaneous translation), location sharing, AR special effect superimposition, and even synchronous immersive interactions such as auditory, visual, and tactile interactions, to improve user experience.

Data channels may be classified into two types based on different uses: a bootstrap data channel (bootstrap data channel, BDC) and an application data channel (application data channel, ADC).

The BDC is a data channel established between UE and a network in an IMS session. The BDC is used for transmission of a graphical user interface. The graphical user interface may include a data channel application list, and the data channel application list indicates a data channel application that can be used by the UE. Therefore, the UE may request to download the data channel application in the list. In other words, the BDC is used by the UE to obtain the data channel application from the DCS.

A terminal device supporting a data channel capability may establish a BDC with a DCS in a call originating network and/or a DCS in a call terminating network. A specific manner depends on whether the networks support the data channel capability and service subscription statuses of the calling and called terminal devices in the networks.

The ADC is used for transmission of exchanged data generated by DC APPs running on the two communication parties. In a P2P scenario, an ADC is established between the calling and called terminal devices. In this case, the ADC is used for transmission of exchanged data generated by data channel applications running on the two communication terminal devices. In a P2A scenario, an ADC is established between the terminal device and a data channel media function. In this case, the ADC is used for transmission of exchanged data generated by DC APPs running on the two communication devices. For example, in the P2A scenario, an ADC is for transmission of exchanged data between the terminal device and the data channel application server. In a P2A2P scenario, an ADC is established between the UE 1 and a data channel MF/MRF, and an ADC is established between the UE 2 and a data channel media function.

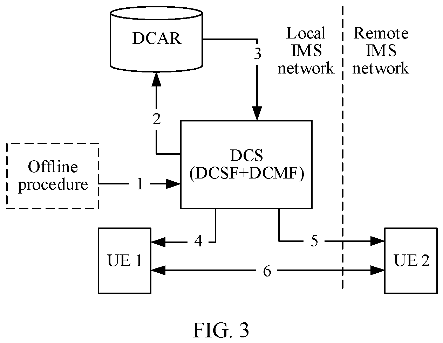

In addition, when the data channel is the ADC, the application layer in the protocol stack shown in FIG. 3 may perform data transmission using a plurality of possible protocols. This is not specifically limited.

### 3. Data channel application

The data channel application in embodiments of this application is an application that provides services through a data channel, and the data channel application is used for transmission of additional communication information through a data channel between a plurality of terminal devices in a same IMS communication session. For example, the additional communication information may include at least one of the following: content shot by a camera of user equipment, information generated by a thumbs-up, information generated by sending a red packet, desktop sharing content, a mark drawn by a user on a screen, a text message entered by the user, picture information entered by the user, geographical location information, video content in a video file, or the like.

In an example, the data channel application is network (Web) content including a hypertext markup language (hypertext markup language, HTML), a JavaScript script and a picture, or cascading style sheets (cascading style sheets, CSS), describes a graphical user interface (user interface, UI), and can implement interactive service logic.

The data channel application is usually downloaded from a network side by a call application on a terminal device, and does not need to be installed or uninstalled by a user. It may be understood that the data channel application may exist in a form of a web page, or may exist in a form of an applet, a quick application, a light application, or the like. This is not limited in this application.

For example, the data channel application in embodiments of this application may be a DC APP in a 4G/5G network. The DC APP can transfer various data such as texts, images, locations, and files before and after an IMS call is established, to implement communication between the calling and called parties in addition to a voice call or a video call, thereby greatly improving experience of the calling and called parties.

The terminal device may obtain the DC APP from a DCS through a BDC in an HTTP procedure, may automatically or interactively update the DC APP at any time, and then perform communication other than a voice call or a video call with a peer terminal device through the DC APP. For example, the UE 1 and the UE 2 are in a same IMS communication session. It is assumed that in a call process between the UE 1 and the UE 2, the UE 1 expects to share a mobile phone screen of the UE 1 with the UE 2 to guide B to perform mobile phone setting. In this case, the UE 1 and UE 2 may first separately obtain a DC APP used for screen sharing, and then separately run the DC APP to perform communication other than a voice call or a video call with the peer UE. With reference to FIG. 3, the following briefly describes a procedure in which a terminal device obtains a DC APP. In an example provided in FIG. 3, an example in which UE 1 and UE 2 are respectively a calling terminal device and a called terminal device is used for description.
① A developer completes development of the DC APP through an offline procedure, and then uploads the developed DC APP to a DCS.
② The DCS stores the DC APP in a DCAR.
③ The DCS downloads the DC APP from the DCAR when necessary.
④ The UE 1 establishes a BDC with the DCS, and obtains the required DC APP from the DCS through the BDC.
⑤ The UE 2 establishes a BDC with the DCS, and obtains the required DC APP from the DCS through the BDC.
⑥ The UE 1 and the UE 2 establish an ADC for transmission of exchanged data of the DC APP.

It should be noted that, after completing the communication session in the foregoing process, the UE may store the DC APP downloaded in the foregoing steps, to use the DC APP in a next communication session. For example, the UE may set storage duration, or a network side may set storage duration of the DC APP for the UE. The UE does not delete the DC APP within the specified duration.

As described in the steps in FIG. 3, the UE first establishes the BDC with the DCS, downloads the DC APP from the DCS through the BDC, and then establishes the ADC. However, if the UE has cached a DC APP that meets a version requirement, the UE does not need to download the DC APP or establish the BDC. Therefore, the solution in the conventional technology may cause some unnecessary signaling exchanges, resulting in a waste of network resources. To resolve this problem, the present invention provides a solution.

FIG. 4a-1 to FIG. 4a-3 are a signaling flowchart for establishing a BDC. For description of a detailed process, refer to section AC.7.1 in TS 23.228.

FIG. 4b-1 and FIG. 4b-2 are a signaling flowchart for establishing a P2P ADC. For description of a detailed process, refer to section AC.7.2.1 in TS 23.228.

FIG. 4c-1 to FIG. 4c-3 are a signaling flowchart for establishing a P2A ADC. For description of a detailed process, refer to section AC.7.2.2 in TS 23.228.

FIG. 4d-1 to FIG. 4d-3 are a signaling flowchart for establishing a P2A2P ADC. For description of a detailed process, refer to section AC.7.2.3 in TS 23.228. FIG. 5 is a flowchart of a data channel establishment method according to an embodiment of the present invention. For example, the method shown in FIG. 5 may be applied to an ADC establishment procedure, and a type of the ADC is P2P, P2A2P, or P2A. It should be noted that, when the type of the ADC is P2P, it indicates that the ADC is established between terminal devices, and a data channel media function is not used as an anchor. When the type of the ADC is P2A2P, it indicates that the terminal devices separately establishes an ADC with a same data channel media function, and the established ADCs correspond to a same application. In other words, the two types of ADCs both involve signaling exchange related to two terminal devices (for example, a first terminal device and a second terminal device in FIG. 5). When the type of the ADC is P2A, it indicates that an endpoint of the ADC is anchored in the data channel media function. In other words, this type of ADC involves signaling exchange related to one terminal device (for example, the first terminal device in FIG. 5), and therefore does not involve a related procedure of interaction with the second terminal device in FIG. 5. The following provides descriptions with reference to FIG. 5.

S501: A first network element sends first information to a second network element.

For example, the first network element may be an IMS AS, for example, the IMS AS in FIG. 1, and the second network element may be a DCS, for example, the DCS in FIG. 1. Further, the second network element may be a DCSF.

The first information is used for notifying that a first terminal device requests to establish a first data channel. The first data channel is used for transmission of data of a DC APP. For example, the first data channel is the foregoing ADC. For example, the first information may include media description information (which may also be referred to as media negotiation information) of the ADC. The first network element sends the media description information of the ADC to the second network element, to notify the second network element that the first terminal device requests to establish the ADC. For example, the first information may be an SDP offer. For example, after receiving a session establishment request 1 (for example, step S500 shown in the figure) from the first terminal device, the first network element may send, to the second network element, a notification (NOTIFY) message that carries the SDP offer.

The first information includes identification information of the DC APP and version information of the DC APP. The identification information of the DC APP may also be referred to as binding information of the DC APP. The version information of the DC APP identifies a version of the DC APP (that is, a version of the DC APP in the first terminal device), and may also be referred to as version control information. For example, the version information of the DC APP may be a version number of the DC APP, release time of the DC APP, or the like.

For example, the identification information of the DC APP may be represented by using the binding information. The version information of the DC APP may be carried in an a line (namely, an attribute line) in an SDP of the ADC, as shown in Table 1. Alternatively, the version information of the DC APP may be carried in an m line in an SDP of the ADC, as shown in Table 2.

**Table 1: Example 1 of the SDP offer**

| |
|---|
| ... |
| m=application port number 1a/quantity of ports transmission protocol media format description; |
| c=network type address type connection address; |
| a=dcmap: 1001; |
| m=application port number 1b/quantity of ports transmission protocol media format description; |
| c=network type address type connection address; |
| a=dcmap: 0; |
| a=DC APP version information |
| ... |

**Table 2: Example 2 of the SDP offer**

| |
|---|
| ... |
| m=application port number 1a/quantity of ports transmission protocol media format description; |
| c=network type address type connection address; |
| a=dcmap: 1001; |
| m=application port number 1b/quantity of ports transmission protocol media format description DC APP version information; |
| c=network type address type connection address; |
| a=dcmap: 0; |
| ... |

For example, in Table 1 or Table 2, "m=application port number 1 a/quantity of ports transmission protocol media format description; c=network type address type connection address; a=dcmap: 1001" indicates the media description information of the ADC. 1001 is an example of a stream ID. For example, if the stream ID is greater than or equal to 1000, it indicates that content included in the SDP offer is the media description information of the ADC.

It may be understood that the media negotiation information shown in Table 1 or Table 2 is merely an example, and the body of the SDP offer may further include another possible parameter. This is not specifically limited.

In another implementation, the first information sent by the first network element to the second network element is further used for notifying that the first terminal device requests to establish a second data channel. In other words, in addition to being used for notifying that the first terminal device requests to establish the first data channel, the first information may be further used for notifying that the first terminal device requests to establish the second data channel. For example, the second data channel is a BDC for the first terminal device. Specifically, the BDC (which may be referred to as a first BDC) for the first terminal device may be a BDC between the first terminal device and a call originating network. Optionally, the BDC may further include a BDC between the first terminal device and a call terminating network. In other words, the first terminal device may initiate establishment of both the BDC and the ADC in one procedure. For example, the first information carries the media description information of the ADC and media description information of the BDC, to notify the second network element that the first terminal device requests to establish the BDC and the ADC.

For example, in Table 1 or Table 2, "a=dcmap: 0" in "m=application port number 1b/quantity of ports transmission protocol media format description; c=network type address type connection address; a=dcmap: 0" indicates that a stream ID of the DC is 0, and 0 is an example of the stream ID. For example, if the stream ID is smaller than 1000, it indicates that this part of the content included in the SDP offer is the media description information of the BDC.

It may be understood that when the first information is used for notifying that the first terminal device requests to establish the first data channel, a network side may determine, based on subsequent determining, whether to accept the establishment of the first data channel. When the first information can be used for notifying that the first terminal device requests to establish the first data channel and can also be used for notifying that the first terminal device requests to establish the second data channel, the network side may determine, based on subsequent determining, whether to accept the establishment of the first data channel and whether to accept the establishment of the second data channel, or the network side may determine to accept the establishment of the first data channel or accept the establishment of the second data channel.

S502: The second network element determines, based on an identifier of the DC APP and the version information of the DC APP, whether to accept the establishment of the first data channel by the first terminal device.

For example, the second network element determines, based on the identifier of the DC APP and the version information of the DC APP, whether the version of the DC APP stored in the first terminal device is compatible. For example, whether the version of the DC APP stored in the first terminal device is compatible may be understood as whether the version of the DC APP stored in the first terminal device is compatible with or consistent with a version of the DC APP stored in the second network element. In other words, the second network element determines whether the first terminal device has a DC APP whose version is compatible with a network.

The version of the DC APP stored in the second network element may also be understood as a version requirement of the DC APP. For example, the second network element may first obtain the version requirement of the DC APP. The version requirement may be provided by a developer of the DC APP, or may be determined by the second network element based on a version number or version time of a latest version of the DC APP cached on the network side. For example, the version information of the DC APP stored on the network side may be obtained via an HSS, a DCAR, or a DCSF. This is not limited in this application.

For example, the second network element may first determine, based on an identifier of a DC APP, a DC APP for which a request of the first terminal device is initiated, and then find a version requirement of the DC APP stored in the second network element.

The version requirement of the DC APP may be a part of DC APP information. For example, the version requirement may be information that is determined by the developer of the DC APP and that meets version compatibility of the DC APP. For example, the version requirement may be a version number or a version number range, and the version number range includes at least one version number. Alternatively, the version requirement may be version time or a version time range, and the version time range includes at least one piece of version time.

When the version number or the version time of the DC APP received by the second network element falls within a corresponding range, it is considered that the DC APP meets the version requirement, in other words, the DC APP meets a version compatibility requirement. When the first terminal device has a DC APP that meets the version requirement, the second network element accepts the establishment of the ADC, and then may further indicate the IMS AS to continue a media negotiation procedure of the ADC. It may be understood that, because the first terminal device has the DC APP that meets the version requirement, the first terminal device does not need to additionally download the DC APP once, that is, a BDC establishment procedure does not need to be additionally introduced. Therefore, the second network element may determine to accept the establishment of the ADC. Optionally, when the second network element further receives a notification that the first terminal device requests to establish the BDC, the second network element may further determine to reject the establishment of the BDC.

When the version number or the version time of the DC APP received by the second network element does not fall within a corresponding range, it is considered that the DC APP does not meet the version requirement, in other words, the DC APP does not meet a version compatibility requirement. When the first terminal device does not have a DC APP that meets the version requirement, the second network element rejects the establishment of the ADC. It may be understood that, because the first terminal device does not have the DC APP that meets the version requirement, the first terminal device needs to additionally download the DC APP once, that is, a BDC establishment procedure needs to be additionally introduced, so that the first terminal device can perform a subsequent ADC establishment procedure only after downloading the DC APP again. Generally, the DC APP downloaded by the first terminal device again can meet the version requirement. Therefore, in this case, the second network element determines to reject the establishment of the ADC. Optionally, when the second network element further receives a notification that the first terminal device requests to establish the BDC, the second network element may further determine to accept the establishment of the BDC, and then may further indicate the IMS AS to trigger the BDC establishment procedure.

Optionally, the version requirement may alternatively be the version number or the version time of the latest version of the DC APP cached on the network side. For example, the second network element uses the version number or the version time of the latest version of the DC APP as the version requirement. When the version number of the DC APP received by the second network element is the same as the version number of the latest version of the DC APP, and/or the version time of the DC APP received by the second network element is the same as the version time of the latest version of the DC APP, and the DC APP stored in the first terminal device meets the version requirement, the second network element determines to accept the establishment of the ADC. Otherwise, the ADC determines to reject the establishment of the ADC.

S503: The second network element sends a data channel establishment indication 1 to the first network element.

In a first possible implementation, when the second network element determines, in step S502, not to accept the establishment of the first data channel by the first terminal device, the second network element indicates, via the data channel establishment indication 1, that the second network element rejects the establishment of the first data channel. Optionally, when the indication information in step 501 is further used for notifying that the first terminal device requests to establish the second data channel, the second network element indicates, via the data channel establishment indication 1 (or another piece of indication information), that the establishment of the second data channel is accepted. For example, the second network element sends, to the IMS AS, the description information of the BDC received in step 501, to indicate the IMS AS to reject the establishment of the ADC and trigger the BDC establishment procedure. Optionally, the second network element may further indicate, to the first network element, a reason for rejecting the establishment of the ADC. The reason may be that the DC APP stored in the first terminal device is incompatible.

In this scenario, the IMS AS performs step S510 after step S503, to be specific, the IMS AS notifies the first terminal device that the request for establishing the first data channel is rejected, and optionally, the request for establishing the second data channel is accepted (for example, a session establishment response 1 carries indication information indicating the foregoing content). Optionally, the session establishment response 1 in step S510 may also include the foregoing reason for rejecting the establishment of the ADC. The first terminal device receives the session establishment response 1 in step S510, and triggers the BDC establishment procedure, so that the first terminal device can download a compatible DC APP after the BDC is established. For this implementation, refer to the following description in FIG. 8.

In a second possible implementation, when the second network element determines, in step 502, to accept the establishment of the first data channel by the first terminal device, the second network element indicates, via the data channel establishment indication 1, that the second network element accepts the establishment of the first data channel, or it may be understood as notifying the IMS AS to continue a negotiation procedure of the first data channel. For example, the second network element sends description information of the ADC to the IMS AS, to indicate that the second network element accepts the establishment of the first data channel, or to indicate the IMS AS to continue the negotiation procedure of the ADC. Optionally, the second network element further indicates, via the data channel establishment indication 1 (or another piece of indication information), that the establishment of the BDC is rejected.

Optionally, when the type of the ADC is P2P or P2A2P, the second network element may further indicate, via the data channel establishment indication 1 (or another piece of indication information), to initiate establishment of a BDC for the second terminal device. For example, the BDC (which may be referred to as a second BDC or a third data channel) for the second terminal device may be a BDC between the call originating network and the second terminal device. Optionally, the BDC may further include a BDC between the call terminating network and the second terminal device.

For example, the data channel establishment indication 1 (or other indication information having an indication function) may be carried in a media control-media instruction message, for example, may be a Nimsas_MediaControl_MediaInstruction message.

For example, the data channel establishment indication 1 (or other indication information having an indication function) may be indicated by using a media instruction (Media instruction) information element in a media control-media instruction message. For example, rejection of the request for establishing the second data channel may be indicated by using a media instruction Media instruction="RejectMedia" corresponding to the BDC, where "RejectMedia" indicates that a request for establishing a data channel is rejected. Acceptance of the establishment of the first data channel or continuation of the negotiation procedure of the first data channel may be indicated by using a media instruction Media instruction="TerminateMedia" or "TerminateAndOriginateMedia" corresponding to the media. "TerminateMedia" indicates that a data channel corresponding to the media is terminated at a data channel server, to be specific, the parameter implicitly indicates that establishment of a data channel between a terminal device and the data channel server may continue. "TerminateAndOriginateMedia" indicates that the data channel corresponding to the media uses the data channel server as an anchor, to be specific, the parameter implicitly indicates that establishment of the data channel using the data channel server as an anchor may continue.

For example, the request for initiating establishment of the BDC (namely, the second BDC) for the UE 2 may be indicated by using a media identifier media ID=NULL, and a media instruction corresponding to the media ID may be Media instruction="OriginateMedia". "OriginateMedia" implicitly indicates that establishment, initiated by the data channel server, of the data channel corresponding to the media may be initiated.

When the version information of the DC APP meets the version requirement, in this implementation, when the type of the ADC is P2A, the IMS AS performs step S510 after step S503, to be specific, the IMS AS notifies the first terminal device that the request for establishing the first data channel is accepted, and optionally, the request for establishing the second data channel is rejected. For this implementation, refer to the following description in FIG. 7. When the type of the ADC is P2P or P2A2P, the second network element further sends description information of the BDC for the second terminal device to the IMS AS. The IMS AS performs step S504 after step S503.

S504: The first network element sends a session establishment request 2 to the second terminal device.

In an implementation, the session establishment request 2 includes the media description information of the ADC. Similarly, as shown in Table 1 or Table 2, the media description information of the ADC includes the identifier of the DC APP and the version information of the DC APP. The version information of the DC APP may be received by the second network element in step 501, or may be stored in the second network element. The version information of the DC APP stored in the second network element may be a version number, a version number range, version time, and/or a version time range. Optionally, the session establishment request 2 further includes media description information of the BDC for the second terminal device.

For example, the session establishment request 2 may be a SIP INVITE message, a re-INVITE message, or an UPDATE message. This is not limited in this application.

S505: The second terminal device determines whether a version of the DC APP stored in the second terminal device is compatible.

For example, whether the version of the DC APP stored in the second terminal device is compatible may be understood as whether the version of the DC APP stored in the second terminal device is compatible with or consistent with the version of the DC APP received by the second terminal device.

For example, after receiving the session establishment request 2, the second terminal device compares the version information of the DC APP carried in the session establishment request message 2 from the first network element with the version information of the DC APP stored in the second terminal device, to determine whether the DC APP stored in the second terminal device is compatible. For example, if the version number of the DC APP carried in the session establishment request message 2 is the same as a version number of the DC APP cached in the second terminal device, and/or the version number of the DC APP carried in the session establishment request 2 message is the same as version time of the DC APP cached in the second terminal device, the second terminal device determines that the DC APP stored in the second terminal device is compatible. Otherwise, the second terminal device determines that the DC APP stored in the second terminal device is incompatible. Alternatively, if the version number of the DC APP cached in the second terminal device is within a version number range corresponding to the version requirement, and/or the version time of the DC APP cached in the second terminal device is within a version time range corresponding to the version requirement, the second terminal device determines that the DC APP stored in the second terminal device is compatible. Otherwise, the second terminal device determines that the DC APP stored in the second terminal device is incompatible.

S506: The second terminal device sends a session establishment response 2 to the first network element. Content of the session establishment response 2 depends on a determining result in step S505.

For example, the session establishment response message 2 may be a 180 message, a 183 message, or a 200 OK message.

In a first possible implementation, in step S505, the second terminal device determines that the DC APP stored in the second terminal device is compatible. In other words, in this case, the second terminal device does not need to download the DC APP from the network side. Therefore, the session establishment response 2 indicates that the establishment of the first data channel from the first terminal device to the second terminal device is accepted. Optionally, when the session establishment request 2 further carries media description information of the third data channel, the session establishment response 2 indicates that establishment of the third data channel is rejected, and the establishment of the first data channel is accepted.

For example, rejection of a request for establishing the third data channel may be represented by setting a port number in an m line of an SDP corresponding to the third data channel to 0. Acceptance of the request for establishing the ADC between the UE 1 and the UE 2 may be represented by a non-zero value of a port number in an m line in the media description information of the ADC in the session establishment response message 2. Optionally, in a scenario in which the ADC and the BDC share the m lines (in other words, combine the m lines), when the request for establishing the third data channel is rejected, an "a=dcmap" line in the SDP corresponding to the third data channel may be deleted.

In this implementation, because the session establishment response 2 indicates that the second terminal device accepts the establishment of the first data channel from the first terminal device to the second terminal device, the first network element performs step S510 after step S506. The session establishment response 1 sent by the first network element to the first terminal device in step S510 also indicates that the establishment of the first data channel is accepted.

Optionally, when the session establishment response 2 further indicates that the establishment of the third data channel is rejected, the session establishment response 1 sent by the first network element to the first terminal device in step S510 also indicates that the establishment of the third data channel is rejected.

After receiving the session establishment response 1, the first terminal device continues the negotiation procedure of the ADC.

For this implementation, refer to the description in FIG. 6. In a second possible implementation, in step S505, the second terminal device determines that the DC APP stored in the second terminal device is incompatible. In other words, in this case, the second terminal device needs to download the DC APP from the network side. Therefore, the session establishment response 2 indicates that the establishment of the first data channel from the first terminal device to the second terminal device is rejected. Optionally, when the session establishment request 2 further carries media description information of the third data channel, the session establishment response 2 indicates that establishment of the third data channel is accepted, and the establishment of the first data channel is rejected. Optionally, the session establishment response 2 further indicates a reason for rejecting the establishment of the first data channel. For example, the reason is that the DC APP stored in the second terminal device is incompatible.

Different from the first possible implementation, after the first network element receives the session establishment response 2, the method further includes steps S507 to S509.

Step S507: The first network element sends second information to the second network element.

In this implementation, because the session establishment response 2 indicates that the second terminal device rejects the establishment of the first data channel, the second information sent by the first network element to the second network element in step S507 also indicates that the establishment of the first data channel is rejected. Optionally, when the session establishment response 2 further indicates that the establishment of the third data channel is accepted, the second information sent by the first network element to the second network element in step S507 further indicates that the establishment of the third data channel is accepted. Optionally, when the session establishment response 2 further indicates a reason for rejecting the establishment of the first data channel, in step S507, the first network element sends, to the second network element, the reason for rejecting the establishment of the first data channel.

Step S508: The second network element determines to reject the establishment of the first channel.

To be specific, although the second network element accepts the establishment of the first data channel in step S502, because the second network element receives the second information in S507, it is updated to a case that the second network element determines to reject the establishment of the first channel. Optionally, based on a fact that the second network element previously accepts the establishment of the first data channel but receives the second information after interacting with the second terminal device, the second network element may learn that the reason for rejecting the first data channel is that the DC APP stored in the second terminal device is incompatible.

Optionally, when the second information further indicates that the establishment of the third data channel is accepted, the second network element may also learn, based on the second information, that the reason for rejecting the first data channel is that the DC APP stored in the second terminal device is incompatible.

Alternatively, based on the reason sent in S507 or a fact that the reason for rejecting the first data channel is that the DC APP stored in the second terminal device is incompatible, the second network element may learn that the reason for rejecting the first data channel is that the DC APP stored in the second terminal device is incompatible.

Step S509: The second network element sends a data channel establishment indication 2 to the first network element.

After step S509, in step S510, the first network element sends the session establishment response 1 to the first terminal device.

The data channel establishment indication 2 and the session establishment response 1 may indicate that the establishment of the first channel is rejected. Optionally, the second network element may further send, to the first network element, the reason for rejecting the establishment of the first data channel. The session establishment response 1 may carry the reason for rejecting the establishment of the first data channel.

Optionally, the second network element may further indicate, to the first network element via the data channel establishment indication 2 (or other indication information), that the establishment of the second data channel is accepted. Correspondingly, the session establishment response 1 may indicate that the establishment of the second data channel is accepted.

Optionally, the second network element may further indicate, to the first network element via the data channel establishment indication 2 (or other indication information), that the establishment of the third data channel is accepted.

After receiving the session establishment response 1, the first terminal device initiates the BDC establishment procedure. For this implementation, refer to the description in FIG. 9.

In addition, for the first possible implementation, after receiving the session establishment response 2 in S506, the first network element may alternatively perform S510 after steps S507 to S509 are performed. Different from the second possible implementation, the indication information transferred in each step corresponds to the content of the session establishment response 2 in S506.

Therefore, according to the solution in this embodiment of the present invention, after receiving a notification that the first terminal device requests to establish the first data channel (ADC), the second network element may determine, based on the received information, whether the version of the DC APP stored in the first terminal device is compatible. When the version of the DC APP stored in the first terminal device is compatible, the second network element may indicate the first network element to continue the negotiation procedure of the first data channel. Otherwise, the establishment of the first data channel is rejected.

In addition, the first terminal device may initiate the establishment of both the first data channel and the second data channel (BDC) in one procedure. If the version of the DC APP stored in the first terminal device or the second terminal device as a communication peer end is incompatible, the second network element indicates the first network element to establish the second data channel. Otherwise, the second network element indicates the first network element to establish the first data channel and rejects the establishment of the second data channel.

Therefore, when the versions of the DC APP stored in the first terminal device and the second terminal device are both compatible, the BDC establishment procedure may be skipped, so that signaling exchange of the BDC procedure is reduced, network resources are saved, and the communication peer end can obtain services corresponding to the DC APP more quickly, thereby improving user experience.

FIG. 6 is a signaling exchange diagram of a data channel establishment method according to an embodiment of the present invention. The following describes a data channel establishment process with reference to FIG. 6.

S601: UE 1 initiates a session establishment request 1, where the session establishment request is used to request to establish an IMS DC with UE 2.

In an implementation, the session establishment request, for the IMS DC, initiated by the UE 1 includes media description information of an ADC and media negotiation information of a BDC, and the media description information of the ADC is used for establishing an ADC between the UE 1 and the UE 2. The media negotiation information of the BDC is used for establishing a BDC between the UE 1 and a DCSF. For ease of description, the BDC is referred to as a first BDC. The session establishment request further includes identification information of a DC APP and version information of the DC APP, and the version information of the DC APP identifies a version of the DC APP. For descriptions of the identification information of the DC APP and the version information of the DC APP, refer to S501 in FIG. 5.

For example, the session establishment request may be a session initiation protocol invite, for example, a SIP INVITE message, or may be a session initiation protocol re-invite, for example, a SIP Re-INVITE message, or may be a session initiation protocol update request, for example, a SIP UPDATE message. This is not limited in this application.

For example, the session establishment request for the IMS DC may be forwarded to an IMS AS via a P-CSCF and/or an S-CSCF.

S602: The IMS AS sends a session event report message to the DCSF.

For example, after receiving the session establishment request for the IMS DC from the UE 1, the IMS AS determines that the session establishment request needs to be notified to the DCSF, and the IMS AS triggers session event reporting, and sends the session event report message to the DCSF. The session event report message notifies the DCSF that the UE 1 requests to establish the first BDC and the ADC. The session event report message may include first information. For content of the first information, refer to the first information in S501 in FIG. 5.

S603: The DCSF determines, based on an identifier of the DC APP and the version information of the DC APP, to accept the establishment of the ADC by the UE 1.

For example, the DCSF determines, based on S502 in FIG. 5, whether to accept the establishment of the ADC. In the example in FIG. 6, a version of the DC APP stored in the UE 1 is compatible. For example, the version of the DC APP stored in the UE 1 is a latest version. Therefore, the DCSF determines to accept the establishment of the ADC.

S604: The DCSF sends a data channel establishment indication 1 to the IMS AS.

In an implementation, the DCSF sends the data channel establishment indication 1 to the IMS AS. The indication information indicates to the IMS AS that the DCSF accepts the request for establishing the ADC for the UE 1, in other words, indicates the IMS AS to continue a negotiation procedure of the ADC. Optionally, the indication information further indicates that the DCSF rejects the request for establishing the first BDC. The indication information further indicates the IMS AS to initiate a process of establishing a BDC between the UE 2 and the DCSF. For ease of description, the BDC is referred to as a second BDC. Optionally, the foregoing actions may be indicated by using same indication information, for example, the data channel establishment indication 1, or may be indicated by using different other indication information.

For example, for a manner in which the DCSF sends the data channel establishment indication 1 to the IMS AS, refer to the description in step S503 in FIG. 5.

S605: The IMS AS sends a session establishment request 2 to the UE 2.

For step S605, refer to the description in step S504 in FIG. 5.

S606: The UE 2 determines that a version of the DC APP stored in the UE 2 is compatible.

For example, the UE 2 may determine, in the manner in S505 in FIG. 5, whether a version of the DC APP stored in the UE 2 is compatible. In the example in FIG. 6, the UE 2 determines that the version of the DC APP stored in the UE 2 is compatible.

It may be understood that, when the version of the DC APP stored in the UE 2 is compatible, the UE 2 does not need to download the DC APP from a network side.

S607: The UE 2 sends a session establishment response 2 to the IMS AS.

For step S607, refer to the first possible implementation in S506 in FIG. 5.

S608: The IMS AS sends a session establishment response 1 to the UE 1, where the response 1 indicates that the DCSF accepts the request for establishing the ADC between the UE 1 and the UE 2. Optionally, the session establishment response 1 further indicates that the DCSF rejects the request for establishing the first BDC. For step S608, refer to the description of S510 in the first possible implementation corresponding to S506 in FIG. 5.

For example, after receiving the session establishment response 1, the UE 1 learns that a network (for example, the DCSF) accepts the request for establishing the ADC between the UE 1 and the UE 2. In this case, the UE 1 may determine that the UE 1 can establish the ADC with the UE 2.

For example, after receiving the session establishment response 1, the UE 1 learns that the network (for example, the DCSF) accepts the request for establishing the ADC between the UE 1 and the UE 2, and rejects the request for establishing the BDC between the UE 1 and the DCSF. In this case, the UE 1 determines that the UE 1 can establish the ADC with the UE 2, and does not perform a BDC establishment procedure.

In this embodiment, the ADC between the UE 1 and the UE 2 may be a P2P ADC, or may be a P2A2P ADC. In this implementation, when a calling user initiates the session establishment request, the session establishment request carries media description information of the BDC and the media description information of the ADC, and the media description information of the ADC carries the identifier of the DC APP and the version information of the DC APP. The network side and a called terminal device may determine, based on the version information of the DC APP, whether a calling terminal device can directly perform an ADC establishment procedure. Therefore, in the scenario in FIG. 6, the BDC establishment procedure may be omitted, thereby reducing signaling overheads.

In another implementation, when the UE 1 initiates the session establishment request 1, the session establishment request 1 may not need to carry the media negotiation information of the first BDC, in other words, the UE 1 does not request to establish the first BDC.

Correspondingly, the session event report message in step S602 may not need to carry the media negotiation information of the first BDC.

In step S604, the data channel establishment indication 1 sent by the DCSF to the IMS AS may not need to indicate that the establishment of the first BDC is rejected.

In step S605, the session establishment request 2 sent by the IMS AS to UE 2 may not need to carry media negotiation information of the second BDC.

In step S607, the session establishment response 2 sent by the UE 2 to the IMS AS may not need to indicate that the BDC between the DCSF and the UE 2 is rejected.

In step S608, the session establishment response 1 sent by the IMS AS to the UE 1 may not need to indicate that the request for establishing the BDC (namely, the first BDC) between the DCSF and the UE 1 is rejected.

In another scenario, the calling terminal device needs to establish a P2A ADC, in other words, an endpoint of the ADC is anchored at a data channel server (and further, a data channel media function). FIG. 7 shows signaling exchange in this scenario. FIG. 7 is described with reference to FIG. 6.

For S701 to S703, refer to steps S601 to S603 in FIG. 6.

For a session establishment request in FIG. 7, refer to the session establishment request 1 in FIG. 6. Different from FIG. 6, the ADC is a P2A ADC, in other words, an endpoint of the ADC is anchored in a data channel application media function, and corresponding media negotiation information of the ADC is not sent to the UE 2.

S704: The DCSF sends a data channel establishment indication 1 to the IMS AS.

In an implementation, the DCSF sends the data channel establishment indication 1 to the IMS AS. The indication information indicates that the IMS AS rejects the request for establishing the first BDC for the UE 1. The indication information further indicates the IMS AS to continue a process of establishing the ADC between the UE 1 and the data channel media function. In other words, in comparison with S604 in FIG. 6, in this step, the BDC between the UE 2 and the DCSF does not need to be requested to be established.

For example, for a manner in which the DCSF sends the data channel establishment indication to the IMS AS, refer to the description in step S503 in FIG. 5.

S705: The IMS AS sends a session establishment response to the UE 1.

In an implementation, the session establishment response indicates that the DCSF accepts the request for establishing the ADC for the UE 1. Optionally, the session establishment response further indicates that the request for establishing the first BDC is rejected. For example, the rejection of the request for establishing the first BDC may be represented by setting a port number in an m line of an SDP corresponding to the first BDC to 0. The acceptance of the request for establishing the ADC for the UE 1 may be represented by a non-zero value of a port number in an m line in the media description information of the ADC in the session establishment response message. Optionally, in a scenario in which the ADC and the BDC share the m lines (in other words, combine the m lines), when the request for establishing the first BDC is rejected, an "a=dcmap" line in the SDP corresponding to the first BDC may be deleted.

Optionally, if the session establishment request in S701 carries media description information of an audio channel and/or a video channel established with the UE 2, the IMS AS sends the session establishment request to the UE 2 after S704. The session establishment request carries the media description information of the audio channel and/or video channel. After receiving a session establishment response sent by the UE 2, the IMS AS performs S705, to be specific, the IMS AS sends the session establishment response to the UE 1.

In another implementation, when the first terminal device initiates the session establishment request, the session establishment request may not need to carry the media negotiation information of the first BDC, in other words, the first terminal device does not request to establish the first BDC.

Correspondingly, the session event report message in S702 may not need to carry the media negotiation information of the first BDC.

In step S704, the data channel establishment indication sent by the DCSF to the IMS AS may not need to indicate that the establishment of the first BDC between the UE 1 and the DCSF is rejected.

In step S705, the session establishment response sent by the IMS AS to the UE 1 may not need to indicate that the establishment of the first BDC between the UE 1 and the DCSF is rejected.

In this implementation, when the calling terminal device initiates the session establishment request, the session establishment request carries the version information of the DC APP. The network may determine, based on the version information of the DC APP, whether the calling terminal device needs to download the DC APP from the network side. When the calling terminal device does not need to download the APP from the network side, the ADC establishment process may be directly performed, and the BDC establishment procedure may be omitted, thereby reducing signaling overheads.

FIG. 8 is a signaling exchange diagram of another data channel establishment method according to an embodiment of the present invention. The following describes a data channel establishment process in FIG. 8 with reference to FIG. 6.

For S801 and S802, refer to S601 and S602 in FIG. 6.

S803: The DCSF determines, based on the identifier of the DC APP and the version information of the DC APP, to reject the establishment of the ADC by the UE 1.

For example, the DCSF determines, based on S502 in FIG. 5, whether to accept the establishment of the ADC. In the example in FIG. 8, the version of the DC APP stored in the UE 1 is incompatible. For example, the version of the DC APP stored in the UE 1 is not a latest version. Therefore, the DCSF determines to reject the establishment of the ADC.

S804: The DCSF sends a data channel establishment indication to the IMS AS.

In an implementation, the DCSF sends the data channel establishment indication to the IMS AS. The indication information indicates to the IMS AS that the DCSF rejects the request for establishing the ADC for the UE 1, in other words, indicates the IMS AS to terminate a negotiation procedure of the ADC. Optionally, the indication information further indicates that the DCSF accepts the request for establishing the first BDC. The indication information further indicates the IMS AS to initiate a process of establishing a BDC between the UE 2 and the DCSF. For ease of description, the BDC is referred to as a second BDC. Optionally, the foregoing actions may be indicated by using same indication information, for example, the data channel establishment indication, or may be indicated by using different other indication information.

Optionally, the data channel establishment indication may further indicate a reason why the DCSF rejects the request for establishing the ADC for the UE 1. The reason why the DCSF rejects the request for establishing the ADC for the UE 1 is that the UE 1 has not cached a DC APP that meets a version requirement, in other words, the UE 1 has not cached a DC APP that meets version compatibility.

For example, the data channel establishment indication may be indicated by using a media instruction (Media instruction) information element in a media control-media instruction message. For example, the rejection of the request for establishing the ADC may be indicated by using a media instruction Media instruction="RejectMedia" corresponding to the ADC, where "RejectMedia" indicates that a request for establishing a data channel is rejected. Acceptance of the establishment of the first BDC may be indicated by using a media instruction Media instruction="TerminateMedia" corresponding to the media.

A request for initiating the establishment of the second BDC may be indicated by using a media identifier media ID=NULL, and a media instruction corresponding to the media ID may be Media instruction="OriginateMedia".

S805: The IMS AS sends a session establishment request 2 to the UE 2.

In an implementation, the IMS AS sends the session establishment request 2 to the UE 2, to request the UE 2 to establish a BDC with the DCSF. The BDC is the second BDC. The session establishment request 2 includes media description information of the second BDC.

For example, the session establishment request 2 may be a SIP INVITE message. The SIP INVITE message carries the media description information of the ADC and the media description information corresponding to the BDC established between the UE 2 and the DCSF. The session establishment request 2 may alternatively be a SIP re-INVITE message or an UPDATE message.

S806: The UE 2 sends a session establishment response 2 to the IMS AS.

In an implementation, the UE 2 sends the session establishment response 2 to the IMS AS. The session establishment response 2 carries the media description information of the second BDC established by the UE 2.

For example, the session establishment response 2 may be a 180 message, a 183 message, or a 200 OK message.

S805 and S806 are optional steps.

S807: The IMS AS sends a session establishment response 1 to the UE 1.

In an implementation, after receiving the session establishment response 2 from the UE 2, the IMS AS sends the session establishment response 1 to the UE 1. The session establishment response 1 indicates that the DCSF rejects the request for establishing the ADC for the UE 1. Optionally, the session establishment response 1 further indicates that the DCSF accepts the request for establishing the first BDC.

For example, the rejection of the request for establishing the ADC may be represented by setting a port number in an m line of an SDP corresponding to the ADC to 0. The acceptance of the request for establishing the first BDC may be represented by a non-zero value of a port number in an m line in the media description information of the BDC in the session establishment response message 1. Optionally, in a scenario in which the ADC and the BDC share the m lines (in other words, combine the m lines), when the request for establishing the ADC is rejected, an "a=dcmap" line in the SDP corresponding to the ADC may be deleted.

For example, the session establishment response information may be a 180 message, a 183 message, or a 200 OK message.

S808: The UE 1 and the UE 2 each complete establishment of a BDC.

For example, after receiving the session establishment response 1, the UE 1 triggers a BDC establishment procedure.

In this step, the UE 1 and the UE 2 each complete establishment of a BDC with the DCSF. It should be noted that a specific process in which the UE 1 or the UE 2 establishes the BDC with the DCSF is not limited in this application. For example, the UE 1 and the UE 2 may establish the BDCs based on the process in FIG. 4a-1 to FIG. 4a-3.

S809: The UE 1 and the UE 2 complete download of the DC APP.

For example, the UE 1 automatically triggers a DC APP download procedure after the BDC is established. For example, after receiving indication information indicating that the BDC is established, the UE 1 sends an HTTP Get request to the DCSF through the BDC, to request to download the DC APP. Alternatively, the DCSF actively pushes the DC APP to the UE 1 after the BDC for the UE 1 is established. For example, after receiving the indication information indicating that the BDC for the UE 1 is established, the DCSF pushes the DC APP to the UE 1 or the UE 2 through the respective BDCs. The UE 2 downloads the DC APP by using a similar procedure.

S810: The UE 1 initiates a session establishment request for an IMS DC, where the session establishment request is used to request to establish the ADC between the UE 1 and the UE 2. For example, the session establishment request carries the media description information of the ADC.

This embodiment may be applied to a scenario in which a calling terminal device has not cached a DC APP that meets a version requirement and needs to download the DC APP from a network side. An ADC established by the calling terminal device to a called terminal device may be a P2P ADC, a P2A2P ADC, or a P2A ADC. Similarly, the network side may determine, based on version information of the DC APP, whether the calling terminal device needs to download the DC APP from the network side. This avoids repeated establishment of the BDC and repeated download of the DC APP.

In another implementation, when the first terminal device initiates the session establishment request, the session establishment request may not need to carry the media negotiation information of the first BDC, in other words, the first terminal device does not request to establish the first BDC.

Correspondingly, the session event report message in step S802 may not need to carry the media negotiation information of the first BDC.

In step S804, the data channel establishment indication 1 sent by the DCSF to the IMS AS may not need to indicate that the DCSF accepts the establishment of the first BDC or may not need to initiate the process of establishing the second BDC.

In this embodiment, if a first message does not carry audio and video media information for the second terminal, S805 and S806 in FIG. 8 do not need to be performed, and S807 and subsequent steps are directly performed after S804. If the first message carries the audio and video media information for the UE 2, S805 and S806 are performed, but media of the second BDC are not carried.

In step S807, the session establishment response 1 sent by the IMS AS to the UE 1 may not need to carry the indication information indicating that the DCSF accepts the request for establishing the first BDC.

FIG. 9 is a signaling exchange diagram of a data channel establishment method according to an embodiment of the present invention. The following describes a data channel establishment process in FIG. 9 with reference to FIG. 6.

For S901 to S903, refer to S601 to S603 in FIG. 6.

S904: The DCSF sends a data channel establishment indication 1 to the IMS AS.

In an implementation, the DCSF indicates, to the IMS AS via the data channel establishment indication 1, that the DCSF accepts the establishment of the ADC, or it may be understood as notifying the IMS AS to continue a negotiation procedure for establishing the ADC. For example, the DCSF sends description information of the ADC to the IMS AS, to indicate that the DCSF accepts the establishment of the ADC, or to indicate the IMS AS to continue the negotiation procedure of the ADC. Optionally, a second network element further indicates, via the data channel establishment indication 1 (or another piece of indication information), that establishment of a BDC is rejected.

Optionally, when a type of the ADC is P2P or P2A2P, the second network element may further indicate, via the data channel establishment indication 1 (or another piece of indication information), to initiate establishment of a BDC for the UE 2. For example, the BDC (which may be referred to as a second BDC) for the UE 2 may be a BDC between a call originating network and the UE 2. Optionally, the BDC may further include a BDC between a call terminating network and the UE 2.

For example, the indication information may be carried in a media control-media instruction message, for example, may be a Nimsas_MediaControl_MediaInstruction message.

For example, for a manner in which the DCSF sends the data channel establishment indication 1 to the IMS AS, refer to the description in step S503 in FIG. 5.

S905: The IMS AS sends a session establishment request 2 to the UE 2.

For step S905, refer to the description in step S504 in FIG. 5.

S906: The UE 2 determines that a version of the DC APP stored in the UE 2 is incompatible.

For example, the UE 2 may determine, in the manner in S505 in FIG. 5, whether the version of the DC APP stored in the UE 2 is compatible. In the example in FIG. 9, the UE 2 determines that the version of the DC APP stored in the UE 2 is incompatible.

It may be understood that, when the version of the DC APP stored in the UE 2 is incompatible, the UE 2 needs to download the DC APP from a network side.

S907: The UE 2 sends a session establishment response 2 to the IMS AS.

For step S907, refer to the second possible implementation in S506 in FIG. 5. In this implementation, the UE 2 rejects a request for establishing the ADC for the UE 1, and accepts a request for establishing the BDC for the UE 2. The BDC may be referred to as the second BDC.

For example, the rejection of the request for establishing the ADC may be represented by setting a port number in an m line of an SDP corresponding to the ADC to 0. The acceptance of the request for establishing the second DC may be represented by a non-zero value of a port number in an m line in media description information of the BDC in the session establishment response message 2. Optionally, in a scenario in which the ADC and the BDC share the m lines (in other words, combine the m lines), when the request for establishing the ADC is rejected, an "a=dcmap" line in the SDP corresponding to the ADC may be deleted.

For example, the response message may be a 180 message, a 183 message, or a 200 OK message.

S908: After receiving the session establishment response from the UE 2, the IMS AS triggers session event reporting 2.

In an implementation, the session event reporting 2 includes indication information, and the indication information indicates that the UE 2 rejects the request for establishing the ADC for the UE 1. Optionally, the indication information further indicates that the UE 2 accepts the request for establishing the BDC for the UE 2. The foregoing two events may be indicated by using same indication information, or may be indicated by using different indication information.

Optionally, the session event reporting 2 may further indicate that a reason why the UE 2 rejects the request for establishing the ADC for the UE 1 is that the DC APP cached in the UE 2 does not meet a version requirement, in other words, does not meet version compatibility.

S909: The DCSF determines, based on the indication information reported by the IMS AS, to reject the establishment of the ADC by the UE 1.

The DCSF receives the session event reporting 2 in S908. The session event reporting 2 indicates that the UE 2 rejects the establishment of the ADC, and further indicates that the UE 2 accepts the establishment of the second BDC. The DCSF determines, based on the event, that the reason why the UE 2 rejects the request for establishing the ADC is that the DC APP stored in the UE 2 lacks version compatibility. Optionally, the DCSF may alternatively make the foregoing determining based on the reason why the UE 2 rejects the request for establishing the ADC.

For example, the DCSF determines, based on a fact that the UE 2 rejects the establishment of the ADC and the reason for rejecting the establishment of the ADC, that the reason why the UE 2 rejects the request for establishing the ADC is that the DC APP stored in the UE 2 lacks version compatibility.

For example, the DCSF determines, based on the reason for rejecting the establishment of the ADC, that the reason why the UE 2 rejects the request for establishing the ADC is that the DC APP stored in the UE 2 lacks version compatibility.

S910: The DCSF sends a channel establishment indication 2 to the IMS AS.

In an implementation, the DCSF sends the channel establishment indication 2 to the IMS AS. The channel establishment indication 2 indicates that the DCSF rejects the request for establishing the ADC for the UE 1. Optionally, the channel establishment indication 2 indicates that the DCSF accepts a request for establishing the first BDC. Optionally, the channel establishment indication 2 further indicates the reason why the DCSF rejects the request for establishing the ADC for the UE 1. For example, the reason may be notified by the IMS AS to the DCSF in S908.

The channel establishment indication 2 further indicates that the request for establishing the BDC for the UE 2, namely, the request for establishing the second BDC, is accepted.

For example, the indication information may be carried in a media control-media instruction message, for example, may be a Nimsas_MediaControl_MediaInstruction message.

For example, the indication information may be indicated by using a media instruction (Media instruction) information element in a media control-media instruction message. For example, the acceptance of the request for establishing the BDC (namely, the first BDC) for the UE 1 may be indicated by using a media instruction Media instruction="TerminateMedia" corresponding to media negotiation for establishing the BDC. The rejection of the request for establishing the ADC may be indicated by using a media instruction Media instruction="RejectMedia" corresponding to the media. The acceptance of the request for establishing the BDC (namely, the second BDC) between the DCSF and the UE 2 may be indicated by using a media instruction Media instruction="TerminateMedia" corresponding to the media.

S911: The IMS AS sends a session establishment response 1 to the UE 1.

In an implementation, the session establishment response 1 indicates that the DCSF accepts the request for establishing the BDC between the UE 1 and the DCSF and rejects the request for establishing the ADC between the UE 1 and the UE 2.

Optionally, the session establishment response 1 may further indicate the reason for rejecting the request for establishing the ADC for the UE 1.

For example, the acceptance of the request for establishing the BDC between the DCSF and the UE 1 may be represented by a non-zero value of a port number in an m line of an SDP corresponding to the first BDC. The rejection of the request for establishing the ADC between the UE 1 and the UE 2 may be represented by setting a port number in an m line in media negotiation information of the ADC in the response message to 0. The foregoing reason may be carried in the a line or the m line of the SDP corresponding to the ADC. For a specific implementation method, refer to Table 1 and Table 2.

For example, the response message may be a 180 message, a 183 message, or a 200 OK message.

S912: The UE 1 determines to initiate a request for establishing the BDC.

For example, the UE 1 determines, based on a fact that the network side rejects the request for establishing the ADC between the UE 1 and the UE 2 and accepts the request for establishing the BDC between the UE 1 and the DCSF, that a reason why the request for establishing the ADC is rejected is that the UE 2 has not cached a DC APP that meets the version requirement, instead of for another reason (for example, the UE 2 does not support a DC or does not subscribe to a DC service). In this case, the UE 1 may continue to initiate a procedure for establishing a data channel.

Alternatively, the UE 1 may further determine, based on a reason why the network side rejects the request for establishing the ADC between the UE 1 and the UE 2, that the reason why the request for establishing the ADC is rejected is that the UE 2 has not cached the DC APP that meets the version requirement.

S913: The UE 1 initiates a session establishment request for the DC.

The UE 1 and the UE 2 complete the establishment of the BDCs to the DCSF. It should be noted that a method in which the UE 1 and the UE 2 complete the establishment of the BDCs to the DCSF is not limited in the present invention. For example, the UE 1 and the UE 2 may establish the BDCs based on the procedure in FIG. 4a-1 to FIG. 4a-3.

S914: The UE 2 downloads the DC APP that meets version compatibility.

In an implementation, the UE 2 determines, based on the media negotiation information carried in S905, for example, based on an identifier of the APP and version information of the DC APP, that the DC APP cached in the UE 2 does not meet the version requirement, and the DC APP needs to be downloaded. After the second BDC is established, the UE 2 may automatically trigger an APP downloading procedure, for example, send an HTTP Get request to the DCSF through the second BDC. Alternatively, after the second BDC is successfully established, the DCSF actively pushes the DC APP that meets the version compatibility.

It should be noted that this step is an optional step.

S915: The UE 1 initiates an ADC establishment procedure to UE 2.

It should be noted that a process of establishing the ADC between the UE 1 and the UE 2 is not limited in this application. For example, the UE 1 and the UE 2 may establish the ADC based on the procedure in FIG. 4b-1 and FIG. 4b-2, FIG. 4c-1 to FIG. 4c-3, or FIG. 4d-1 to FIG. 4d-3.

In another implementation, when the UE 1 initiates the session establishment request, the session establishment request may not need to carry the media negotiation information of the first BDC, in other words, the UE 1 does not request to establish the first BDC.

Correspondingly, the session establishment request 1 in step S901 and the session event report message in step S902 may not need to carry the media negotiation information of the first BDC.

In step S904, the data channel establishment indication 1 sent by the DCSF to the IMS AS may not need to indicate that the establishment the first BDC is rejected, and the data channel establishment indication 1 may also indicate that a BDC establishment procedure for the UE 2 does not need to be initiated.

In step S905, the session establishment request 2 sent by the IMS AS to the UE 2 may not need to carry the media negotiation information for establishing the BDC for the UE 2.

The session establishment response 2 in step S907 does not need to indicate that the UE 2 accepts the request for establishing the BDC between the DCSF and the UE 2.

In step S908, the session event reporting 2 does not need to indicate that the UE 2 accepts the request for establishing the BDC between the DCSF and the UE 2.

In step S909, the DCSF does not need to determine, based on a fact that the UE 2 accepts the request for establishing the BDC between the DCSF and the UE 2, to reject the establishment of the ADC by the UE 1.

In step S910, the channel establishment indication 2 does not indicate that the DCSF accepts the request for establishing the BDC for the UE 1.

In step S911, the session establishment response 1 does not indicate that the DCSF accepts the request for establishing the BDC for the UE 1.

This embodiment may be applied to a scenario in which a called terminal device has not cached a DC APP that meets a version requirement and needs to download the DC APP from a network side. An ADC established by a calling terminal device to the called terminal device may be a P2P ADC, a P2A2P ADC, or a P2A ADC. Similarly, the network side and the called terminal device may determine, based on version information of the DC APP, whether the terminal device needs to download the DC APP from the network side. This avoids repeated establishment of the BDC and repeated download of the DC APP.

FIG. 10 and FIG. 11 each are a diagram of a possible structure of a communication apparatus according to an embodiment of this application. These communication apparatuses may be configured to implement functions of the terminal device, the data channel application server, or the IMS AS in the foregoing method embodiments. Therefore, beneficial effects of the foregoing method embodiments can also be implemented. In embodiments of this application, the communication apparatus may be the foregoing device or a module (for example, a chip) in the foregoing device.

As shown in FIG. 10, the communication apparatus 1000 includes a processing unit 1010 and a transceiver unit 1020. The communication apparatus 1000 is configured to implement the functions of the terminal device, the IMS AS, or the data channel application server in the method embodiment shown in any one of FIG. 5, FIG. 6, FIG. 7, FIG. 8, and FIG. 9.

When the communication apparatus 1000 is configured to implement the functions of the data channel application server in the method embodiments shown in the foregoing accompanying drawings,
the transceiver unit 1020 is configured to receive first information from a first network element, where the first information is used for notifying that a first terminal device requests to establish a first data channel, the first data channel is used for transmission of data of a data channel application, and the first information includes an identifier of the data channel application and version information of the data channel application; and the processing unit 1010 is configured to determine, based on the identifier of the data channel application and the version information of the data channel application, whether to accept the establishment of the first data channel by the first terminal device.

When the communication apparatus 1000 is configured to implement the functions of the terminal device in the method embodiments shown in the foregoing accompanying drawings,
the transceiver unit 1020 is configured to receive first information, where the first information is used for notifying that a first terminal device requests to establish a first data channel, the first data channel is used for transmission of data of a data channel application, and the first information includes an identifier of the data channel application and version information of the data channel application; and the processing unit 1010 is configured to determine, based on the identifier of the data channel application and the version information of the data channel application, whether to accept the establishment of the first data channel by the first terminal device.

For more detailed descriptions of the processing unit 1010 and the transceiver unit 1020, directly refer to related descriptions in the method embodiments shown in the foregoing accompanying drawings. Details are not described herein again.

As shown in FIG. 11, the communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions executed by the processor 1110, store input data required by the processor 1110 to run the instructions, or store data generated after the processor 1110 runs the instructions.

When the communication apparatus 1100 is configured to implement the methods shown in the foregoing accompanying drawings, the processor 1110 is configured to implement a function of the processing unit 1110, and the interface circuit 1120 is configured to implement a function of the transceiver unit 1120.

When the communication apparatus is a chip used in the foregoing device, the chip implements functions of the corresponding device in the foregoing method embodiments. The chip receives information from another module (for example, a radio frequency module or an antenna) in the device, where the information is sent by another device to the device. Alternatively, the chip sends information to another module (for example, a radio frequency module or an antenna) in the device.

When the communication apparatus is a module used in a mobile node, the module implements functions of the mobile node in the foregoing method embodiments. The module receives information from another module (for example, a radio frequency module or an antenna), where the information is sent by a terminal to the device. Alternatively, the module sends information to another module (for example, a radio frequency module or an antenna) in the device, where the information is sent by the device to a terminal. The module herein may be a baseband chip in the device, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

This application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. For example, the communication apparatus includes one processor and one memory. As shown in FIG. 11, the communication apparatus 1100 includes one processor 1110 and one memory 1130. The processor 1110 is coupled to the memory 1130. The memory 1130 stores instructions. When the instructions stored in the memory 1130 are executed by the processor 1110, the communication apparatus 1100 performs the method performed by the terminal device or the network device in the foregoing embodiments.

It should be understood that the processor 1110 and the memory 1130 may alternatively be integrated together, for example, integrated into one chip.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in a network device or a terminal. Alternatively, the processor and the storage medium may exist in a network device or a terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, but are not used to limit the scope of embodiments of this application. Sequence numbers of the foregoing processes do not mean an execution sequence, and the execution sequence of the processes should be determined based on functions and internal logic of the processes.

## Claims

1. A data channel establishment method, wherein the method comprises:
receiving first information, wherein the first information is used for notifying that a first terminal device requests to establish a first data channel, the first data channel is used for transmission of data of a data channel application, and the first information comprises an identifier of the data channel application and version information of the data channel application; and
determining, based on the identifier of the data channel application and the version information of the data channel application, whether to accept the establishment of the first data channel by the first terminal device.

2. The method according to claim 1, wherein the version information of the data channel application comprises at least one of the following:
a version number of the data channel application, and
time information corresponding to a version of the data channel application.

3. The method according to claim 1 or 2, wherein the determining, based on the identifier of the data channel application and the version information of the data channel application, whether to accept the establishment of the first data channel by the first terminal device comprises:
when the version information of the data channel application meets a version requirement, determining to accept the establishment of the first data channel by the first terminal device.

4. The method according to claim 3, wherein that the version information of the data channel application meets the version requirement comprises:
a version of the data channel application cached in the first terminal device is a latest version.

5. The method according to claim 3 or 4, wherein the method further comprises:
indicating a first network element to continue to establish the first data channel.

6. The method according to any one of claims 3 to 5, wherein the first information is further used for notifying that establishment of a second data channel is requested, and the second data channel is used by the first terminal device to obtain the data channel application that meets the version requirement.

7. The method according to any one of claims 3 to 6, wherein the method further comprises:
indicating the first network element to reject the establishment of the second data channel.

8. The method according to any one of claims 3 to 5, wherein the method further comprises:
receiving second information from the first network element, wherein the second information is used for notifying a second terminal device that the establishment of the first data channel is rejected.

9. The method according to claim 8, wherein the second information is further used for notifying that the second terminal device has not cached the data channel application that meets the version requirement.

10. The method according to claim 8 or 9, wherein the method further comprises:
indicating the first network element to reject the establishment of the first data channel.

11. The method according to any one of claims 3 to 10, wherein the method further comprises:
indicating the first network element to request the second terminal device to establish a third data channel, wherein the third data channel is used by the second terminal device to obtain the data channel application that meets the version requirement.

12. The method according to any one of claims 3 to 11, wherein the method further comprises:
receiving the second information from the first network element, wherein the second information is used for notifying the second terminal device that the establishment of the third data channel is accepted.

13. The method according to claim 11 or 12, wherein the method further comprises:
indicating the first network element to accept the establishment of the third data channel.

14. The method according to claim 1 or 2, wherein the determining, based on the identifier of the data channel application and the version information of the data channel application, whether to accept the establishment of the first data channel by the first terminal device comprises:
when the version information of the data channel application does not meet the version requirement, determining to reject the establishment of the first data channel by the first terminal device.

15. The method according to claim 14, wherein that the version information of the data channel application does not meet the version requirement comprises:
a version of the data channel application cached in the first terminal device does not meet the version requirement.

16. The method according to claim 15, wherein that the version information of the data channel application does not meet the version requirement comprises:
the version of the data channel application cached in the first terminal device is not a latest version.

17. The method according to any one of claims 14 to 16, wherein the method further comprises:
sending second information to a first network element, wherein the second information is used for notifying that the establishment of the first data channel is rejected.

18. The method according to claim 17, wherein the second information is further used for notifying that the first terminal device has not cached a data channel application that meets the version requirement.

19. The method according to any one of claims 14 to 17, wherein the first information is further used for notifying that establishment of a second data channel is requested, and
the method further comprises:
indicating the first network element to accept the establishment of the second data channel.

20. A session establishment method, applied to a communication apparatus, wherein the method comprises:
receiving first information, wherein the first information is used for notifying that a first terminal device requests to establish a first data channel, the first data channel is used for transmission of data of a data channel application, and the first information comprises an identifier of the data channel application and version information of the data channel application; and
determining, based on the identifier of the data channel application and the version information of the data channel application, whether to accept the establishment of the first data channel by the first terminal device.

21. The method according to claim 20, wherein the determining, based on the identifier of the data channel application and the version information of the data channel application, whether to accept the establishment of the first data channel by the first terminal device comprises:
when the version information of the data channel application does not meet a version requirement, determining to reject the establishment of the first data channel by the first terminal device.

22. The method according to claim 21, wherein the method further comprises:
sending second information to a first network element, wherein the second information is used for notifying the communication apparatus that the establishment of the first data channel is rejected.

23. The method according to claim 22, wherein the second information is further used for notifying that the data channel application cached in the communication apparatus does not meet the version requirement.

24. The method according to any one of claims 21 to 23, wherein the first information is further used for notifying that establishment of a second data channel is requested, the second data channel is used by the communication apparatus to obtain the data channel application that meets the version requirement, and the second information is further used for notifying the communication apparatus that the establishment of the second data channel is accepted.

25. The method according to claim 20, wherein the determining, based on the identifier of the data channel application and the version information of the data channel application, whether to accept the establishment of the first data channel by the first terminal device comprises:
when the version information of the data channel application meets a version requirement, determining to accept the establishment of the first data channel by the first terminal device.

26. The method according to claim 25, wherein the method further comprises:
sending second information to a first network element, wherein the second information is used for notifying the communication apparatus that the establishment of the first data channel is accepted.

27. The method according to claim 25 or 26, wherein the first information is further used for notifying that establishment of a second data channel is requested, the second data channel is used by the communication apparatus to obtain the data channel application that meets the version requirement, and
the method further comprises:
indicating the first network element to reject the establishment of the second data channel by the communication apparatus.

28. A data channel establishment method, wherein the method comprises:
receiving first information, wherein the first information is used for notifying that a first terminal device requests to establish a first data channel, the first data channel is used for transmission of data of a data channel application, and the first information comprises an identifier of the data channel application and version information of the data channel application; and
determining, based on the identifier of the data channel application and the version information of the data channel application, whether to accept the establishment of the first data channel by the first terminal device.

29. The method according to claim 28, wherein the version information of the data channel application comprises at least one of the following:
a version number of the data channel application, and
time information corresponding to a version of the data channel application.

30. The method according to claim 29 or 30, wherein the determining, based on the identifier of the data channel application and the version information of the data channel application, whether to accept the establishment of the first data channel by the first terminal device comprises:
when the version information of the data channel application meets a version requirement, determining to accept the establishment of the first data channel by the first terminal device.

31. The method according to claim 30, wherein that the version information of the data channel application meets the version requirement comprises:
a version of the data channel application cached in the first terminal device is a latest version.

32. The method according to claim 30 or 31, wherein the method further comprises:
indicating a first network element to continue to establish the first data channel.

33. The method according to any one of claims 30 to 32, wherein the first information is further used for notifying that establishment of a second data channel is requested, and the second data channel is used by the first terminal device to obtain the data channel application that meets the version requirement.

34. The method according to any one of claims 30 to 33, wherein the method further comprises:
indicating the first network element to accept the establishment of the second data channel.

35. The method according to any one of claims 30 to 32, wherein the method further comprises:
receiving second information from the first network element, wherein the second information is used for notifying a second terminal device that the establishment of the first data channel is rejected.

36. The method according to claim 35, wherein the second information is further used for notifying that the second terminal device has not cached the data channel application that meets the version requirement.

37. The method according to claim 35 or 36, wherein the method further comprises:
indicating the first network element to reject the establishment of the first data channel.

38. The method according to any one of claims 30 to 37, wherein the method further comprises:
indicating the first network element to request the second terminal device to establish a third data channel, wherein the third data channel is used by the second terminal device to obtain the data channel application that meets the version requirement.

39. The method according to any one of claims 30 to 38, wherein the method further comprises:
receiving the second information from the first network element, wherein the second information is used for notifying the second terminal device that the establishment of the third data channel is accepted.

40. The method according to claim 38 or 39, wherein the method further comprises:
indicating the first network element to accept the establishment of the third data channel.

41. The method according to claim 38 or 39, wherein the determining, based on the identifier of the data channel application and the version information of the data channel application, whether to accept the establishment of the first data channel by the first terminal device comprises:
when the version information of the data channel application does not meet the version requirement, determining to reject the establishment of the first data channel by the first terminal device.

42. The method according to claim 41, wherein that the version information of the data channel application does not meet the version requirement comprises:
a version of the data channel application cached in the first terminal device does not meet the version requirement.

43. The method according to claim 42, wherein that the version information of the data channel application does not meet the version requirement comprises:
the version of the data channel application cached in the first terminal device is not a latest version.

44. The method according to any one of claims 41 to 43, wherein the method further comprises:
sending second information to a first network element, wherein the second information is used for notifying the second terminal device that the establishment of the first data channel is rejected.

45. The method according to claim 44, wherein the second information is further used for notifying that the first terminal device has not cached a data channel application that meets the version requirement.

46. The method according to any one of claims 41 to 44, wherein the first information is further used for notifying that establishment of a second data channel is requested, and
the method further comprises:
indicating the first network element to accept the establishment of the second data channel.

47. A communication system, comprising a terminal device and a data channel server DCS, wherein the data channel server DCS is configured to implement the method according to any one of claims 1 to 19 or the method according to any one of claims 28 to 46, and the terminal device is configured to implement the method according to any one of claims 20 to 27.

48. A communication apparatus, comprising a unit or a module configured to perform the method according to any one of claims 1 to 19, a unit or a module configured to perform the method according to any one of claims 20 to 27, or a unit or a module configured to implement the method according to any one of claims 28 to 46.

49. A readable storage medium, wherein the readable storage medium stores a program, and when the program is executed by a communication apparatus, the method according to any one of claims 1 to 19, the method according to any one of claims 20 to 27, or the method according to any one of claims 28 to 46 is implemented.

50. A chip system, comprising: a memory, configured to store a computer program; and a processor, wherein after the processor invokes the computer program from the memory and runs the computer program, a communication apparatus in which the chip system is installed is caused to perform the method according to any one of claims 1 to 19 or the method according to any one of claims 20 to 27, or implement the method according to any one of claims 28 to 46.

51. A computer program product, wherein the computer program product comprises instructions, and when the instructions are run on a processor, the processor is caused to perform the method according to any one of claims 1 to 19 or the method according to any one of claims 20 to 27, or implement the method according to any one of claims 28 to 46.
